(19) Europäisches Patentamt
European Patent Office
Office européen des brevets

(11) **EP 4 715 885 A1**

(12) **EUROPEAN PATENT APPLICATION**
published in accordance with Art. 153(4) EPC

(43) Date of publication:
**25.03.2026 Bulletin 2026/13**

(21) Application number: 24852431.6

(22) Date of filing: **12.08.2024**

(51) International Patent Classification (IPC):
*H01M 4/131* (2010.01)          *H01M 4/04* (2006.01)
*H01M 4/62* (2006.01)          *H01M 4/1391* (2010.01)
*H01M 4/02* (2006.01)

(52) Cooperative Patent Classification (CPC):
H01M 4/02; H01M 4/04; H01M 4/131;
H01M 4/1391; H01M 4/62; Y02E 60/10

(86) International application number:
**PCT/KR2024/012023**

(87) International publication number:
**WO 2025/034078 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 KR 20230105146**

(71) Applicant: **LG Energy Solution, Ltd.
Seoul 07335 (KR)**

(72) Inventors:
• **SHIN, Dong-Mok
Daejeon 34122 (KR)**
• **PARK, Joo-Nam
Daejeon 34122 (KR)**
• **PARK, Moon-Soo
Daejeon 34122 (KR)**
• **SHIN, Dong-Oh
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **DRY ELECTRODE FOR ELECTROCHEMICAL DEVICE AND METHOD FOR MANUFACTURING SAME**

(57)     A dry electrode according to the present disclosure has an electrode active material layer including large diameter pores, leading to easy lithium (Li) migration, low Li diffusion resistance and fast lithium movement, thereby reducing or suppressing overvoltage, and improving high rate charge/discharge characteristics.

FIG. 4

**Description**

TECHNICAL FIELD

The present application claims priority to Korean Patent Application No. 10-2023-0105146 filed on August 10, 2023 in the Republic of Korea, the disclosure of which is incorporated herein by reference. The present disclosure relates to a dry electrode for an electrochemical device including a dry electrode film. Additionally, the present disclosure relates to a method for manufacturing the same.

BACKGROUND

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of application of secondary batteries is gradually expanding. One of typical secondary batteries, lithium secondary batteries, are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to an auxiliary power source through a grid. A process of manufacturing a lithium secondary battery is largely classified into three steps; an electrode manufacturing process, an electrode assembly manufacturing process and a formation/ageing process. The electrode manufacturing process is subclassified into an electrode material mixing process, an electrode coating process, a drying process, a rolling process, a slitting process and a winding process. Among them, the electrode material mixing process is a process of mixing the components for forming an electrode active layer in which electrochemical reaction actually occurs in the electrode, and specifically, mixing an electrode active material which is the essential element of the electrode with an additive such as a conductive material, fillers, a binder for binding powder and adhering to a current collector, and a solvent for imparting viscosity and dispersing power to prepare a flowable slurry.

The mixed composition for the formation of the electrode active material is referred to as an electrode mixture in broad sense. Subsequently, the electrode coating process of applying the electrode mixture to an electrically conductive current collector, and the drying process for removing a solvent contained in the electrode mixture are performed, and additionally the electrode is rolled to a predetermined thickness.

Meanwhile, as the solvent included in the electrode mixture evaporates in the drying process, defects such as pin holes or cracks may occur in the already formed electrode active layer. Additionally, the active layer is not uniformly dried all over the entire inner/outer area, and due to a difference in solvent evaporation rate, some regions get dry earlier and the powder at the corresponding regions floats, and some other regions get dry later at a time interval, resulting in low quality of the electrode.

To solve this problem, efforts have been devoted to dryers for uniformly drying the inner and outer area of the active layer and adjusting the solvent evaporation rate, but these dryers are very expensive and require a considerate amount of costs and time to operate them, so it is disadvantageous in terms of manufacturing process. Accordingly, recently, many studies are being made to manufacture dry electrodes without solvents.

The manufacture of dry electrodes has eco-friendliness, process simplification and cost saving effects. Additionally, in the manufacture of wet electrodes, binder resin migration occurs during the drying of an electrode slurry, but such binder resin migration does not occur in the manufacture of dry electrodes, so the manufactured electrodes have uniform binder resin distribution in the thickness direction. By the uniform binder resin distribution, battery capacity decline, performance degradation and short life problems may be prevented.

However, in the manufacture of dry electrodes, when the binder resin is fibrillated too finely or the pore size is small, the narrow pores impede the migration of Li ions, causing a decline in electrode capacity during high rate charging/discharging. Accordingly, in addition to uniform binder/conductive material distribution in the vertical direction (thickness direction) of the electrodes, there is a need for electrode structure design for fast ion transport to improve high rate charge/discharge. The present disclosure needs to study the structure control of dry electrode films that is effective for high rate charge/discharge through an optimal level of kneading process.

SUMMARY

Technical Problem

The present disclosure is designed to solve the above-described problem, and the present disclosure is directed to providing a dry electrode having an advantageous structure for high rate charge/discharge in which an electrode active material layer has a uniform binder/conductive material distribution, and pores of a small deviation and a uniform size to minimize a ratio of too large or small pores.

The present disclosure is further directed to providing a method for manufacturing the dry electrode having the above-described structure.

It will be easily understood that these and other objectives and advantages of the present disclosure may be realized by the means or methods set forth in the appended claims and a combination thereof.

Technical Solution

A first aspect of the present disclosure relates to a dry electrode for an electrochemical device, wherein an electrode active material layer includes a dry electrode film, the electrode active material layer includes an electrode active material and a binder resin, the binder resin is fibrillated, the electrode active material layer has an average pore diameter of 5.0 $\mu$m or more and a porosity of from 15 vol% to 50 vol%, and the average pore diameter is calculated based on a longest pore diameter. In the above-described aspect, the average pore diameter of the electrode active material layer may be 6.0 $\mu$m or more.

In any one of the above-described aspects, the average pore diameter of the electrode active material layer may be 6.5 $\mu$m or more.

In any one of the above-described aspects, in the electrode active material layer, the average diameter ($\mu$m) of pores having the diameter of from 4 $\mu$m to 8 $\mu$m may be 6.5 $\mu$m or more.

In any one of the above-described aspects, in the electrode active material layer, a ratio of a number of pores having the diameter of from 4 $\mu$m to 8 $\mu$m to a total number of pores may be 80% or more.

In any one of the above-described aspects, in the electrode active material layer, a ratio of a volume of pores having the diameter of from 4 $\mu$m to 8 $\mu$m to a total pore volume may be 60% or more.

In any one of the above-described aspects, in the electrode active material layer, a geodesic tortuosity ($\tau_{geo}$) according to the following Equation 1 may be 1.15 or less:

$$[\text{Equation 1}]$$

$$\tau_{geo} = \frac{L_{eff}}{L}$$

In the above Equation 1, L denotes a thickness of the electrode active material layer, and $L_{eff}$ denotes a lithium ion movement path length in the electrode active material layer.

In any one of the above-described aspects, in the electrode active material layer, a physical tortuosity ($\tau_{phy}$) according to the following Equation 2 may be 3 or less:

$$[\text{Equation 2}]$$

$$\tau_{phy} = \sqrt{\varepsilon \frac{\sigma_0}{\sigma_{eff}}}$$

In the above Equation 2, $\varepsilon$ denotes the porosity of the electrode active material layer, $\sigma_0$ denotes an electrolyte conductivity and $\sigma_{eff}$ denotes an effective electrolyte conductivity by pore structure.

In any one of the above-described aspects, the binder resin may include polytetrafluoroethylene (PTFE), polyvinylidene fluoride (PVDF), polyolefin, or a mixture of two or more of them.

In any one of the above-described aspects, a degree of crystallinity of the dry electrode film may be more than 0% and 10% or less.

In any one of the above-described aspects, the binder resin may include fibrillated fibrils of which parts have a diameter of 1 $\mu$m or more.

In any one of the above-described aspects, the fibrillated binder resin may include the fibrils of which the parts having the diameter of 1 $\mu$m or more are 5 $\mu$m or more in length.

The present disclosure may provide a method for manufacturing a dry electrode film according to any one of the above-described aspects, and the method may include the steps of (S10) preparing a powdery blend including an electrode active material, a conductive material, and a binder resin; (S20) kneading the powdery blend to prepare a bulk blend; (S30) grinding the bulk blend to obtain an electrode powder; and (S40) calendering the electrode powder.

In any one of the above-described aspects, a D50 of the electrode powder obtained in the (S30) may range from 100 $\mu$m to 700 $\mu$m.

Each embodiment may be independently implemented or alternatively, two or more of the above-described embodiments may be implemented in combination.

Advantageous Effects

The dry electrode according to the present disclosure may have the electrode active material layer in which the ratio of too small or large diameter pores is low and the pores have a small deviation of pore size and uniform pore size, making lithium (Li) migration easy, leading to low Li diffusion resistance and fast lithium transport, thereby reducing or suppressing overvoltage, and improving high rate charge/discharge characteristics.

BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure is not construed as being limited to the drawings.

FIGS. 1a to 1c show the pore shape and size distribution of Example 1, Comparative Example 1 and Comparative Example 2, respectively.

FIG. 1d shows the pore diameter and relative probability (%) of each of Example 1, Comparative Example 1 and Comparative Example 2.

FIG. 1e is a reference drawing showing the classified pore shapes.

FIGS. 2a to 2d show charge curves as a function of C-rate in Comparative Example 1, Comparative Example 2 and Example 1.

FIGS. 3a to 3d show discharge curves as a function of C-rate in Comparative Example 1, Comparative Example 2 and Example 1.

FIG. 4 shows a scanning electron microscopic (SEM) image of an electrode active material layer in an electrode according to Example 1.

FIG. 5 shows an SEM image of an electrode active material layer in an electrode according to Comparative Example 2.

FIGS. 6 to 11 show the image processing result of an electrode active material area and a binder area in a random cross section of an electrode according to each of Example 1, Comparative Example 1 and Comparative Example 2.

FIGS. 12a to 14b show SOC 3D mapping of a delithiated area at the end of charge in an electrode according to each of Example 1, Comparative Example 1 and Comparative Example 2.

FIG. 15 is a graph showing the result of calculating geodesic tortuosity and physical tortuosity of an electrode active material layer in an electrode according to each of Example 1, Comparative Example 1 and Comparative Example 2.

FIG. 16 is a schematic diagram of an electrode according to an embodiment of the present disclosure.

FIG. 17 is a schematic diagram showing the calculation of a QBR value of an electrode active material layer.

FIG. 18 is a graph exemplarily showing the gray value for each material of an electrode obtained using a focused ion beam (FIB) equipment. FIG. 19 is a graph showing each variable in Equation 3 and Equation 4.

FIGS. 20 and 21 are SEM images showing a mixture powder prepared in Example 1, including electrode active material particles and a fibrillated binder resin.

DETAILED DESCRIPTION

Hereinafter, the present disclosure will be described in more detail to help the understanding of the present disclosure.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

The terms used herein are used to describe exemplary embodiments, but not intended to be limiting of the present disclosure. As used herein, the singular forms include the plural forms as well, unless the context clearly indicates otherwise.

It should be further understood that 'comprise', 'include' or 'have' when used in the specification, specifies the presence of stated elements and does not preclude the presence or addition of one or more other elements unless expressly stated otherwise.

The particle size $D_{10}$, $D_{50}$ and $D_{90}$ as used herein refers to a particle size at 10%, 50% and 90% of cumulative particle size distribution of particles, respectively. The particle size may be measured using a laser diffraction method. Specifically, the particle size distribution is calculated by dispersing a target powder in a dispersion medium, feeding it into a commercially available laser diffraction particle size measurement device (for example, Microtrac S3500) and measuring a diffraction pattern difference according to the particle size when particles pass through a laser beam. The particle size $D_{10}$, $D_{50}$ and $D_{90}$ may be measured by calculating the particle diameter at 10%, 50% and 90% of cumulative particle size distribution of particles in the measurement device. For example, the specimen and a surfactant (for example, a non-ionic surfactant, Triton-X, etc.) may be added to the dispersion medium and ultrasonic dispersed to obtain a dispersion, the dispersion may be set in the laser diffraction particle size distribution measurement device (Microtrac S3500), and the volume-based particle size distribution may be measured. The dispersion medium may include water. The amount of the specimen is not limited to a particular range, but may range from about 0.1g to 20g. However, in the experiment, the amount may be adjusted. Meanwhile, the amount of the surfactant and the amount of the water may be properly adjusted according to the amount of the specimen. Alternatively, $D1_0$, $D5_0$ and $D9_0$ of the particles may be determined through a 3-dimensional (3D) modeling method as described below.

The "thickness" of each layer included in the electrode as used herein may indicate a value measured by a known thickness measurement method. The thickness may be, for example, a value measured using a thickness measurement device (Mitutoyo, VL-50S-B) although the thickness measurement method is not limited thereto.

In the specification, the electrode includes a dry electrode film as an electrode active material layer. The dry electrode and the dry electrode film refer to those manufactured by a dry manufacturing process that does not use a solvent for dispersing electrode components such as an electrode active material, a conductive material and a binder.

In the present disclosure, the dry electrode is an electrode for an electrochemical device, and the electrochemical device may be, for example, a secondary battery, and the secondary battery may be, more specifically, a lithium ion secondary battery.

[Dry electrode]

A first aspect of the present disclosure relates to a dry electrode. The dry electrode includes a current collector and a dry electrode film as an electrode active material layer on at least one surface of the current collector. As described below, the dry electrode may be obtained by joining the dry electrode film and the current collector together through a lamination process. The dry electrode film includes an electrode active material and a binder resin, and if necessary, may further include a conductive material.

The dry electrode film may have a plate-shaped structure formed by the compaction of an electrode powder (powder) by a dry method. The electrode powder includes an assembly of mixture particles including the electrode active material and the binder resin. If necessary, the mixture particles may further include the conductive material. The dry electrode film according to the present disclosure has a porous structure, and the porous structure results from pores by interstitial volume between the mixture particles. Additionally, in the dry electrode film, the binder resin may be subjected to treatment by a fibrillation process as described below, causing it to break into smaller pieces and become loose in the surface to produce a lot of fine fibers (fibrils). Additionally, the electrode powder may further include a free electrode active material or binder resin, which is not involved in the particulate.

[Porosity]

In the present disclosure, the dry electrode film may have porosity of from 15 vol% to 50 vol%, and the porosity may be preferably controlled to values of 45 vol% or less, or 40 vol% or less, or 35 vol% or less , or 30 vol% or less within the aforementioned range. The lower limit of the porosity may be, for example, controlled to 20 vol% or more. When the porosity lies in the aforementioned range, it is preferable in terms of various effects. In contrast, outside the aforementioned range, when the porosity is too small, electrolyte wetting is inadequate, and it is not preferable in terms of life characteristics or output characteristics, and when the porosity is too large, the volume increase is needed to achieve the same capacity, so it is not preferable in terms of energy density relative to volume. In an embodiment of the present disclosure, after measuring apparent density of the dry electrode film, the porosity may be calculated by the following [Relation equation 1a] using the actual density (net density) calculated based on the actual density and composition of each component.

[Relation equation 1a]

$$\text{Porosity (vol\%)} = \{ 1 - (\text{Apparent density/Net density})\} \times 100$$

Meanwhile, in the above Relation equation 1a, the apparent density may be calculated from the following Relation equation 1b.

$$\text{Apparent density (g/cm}^3) = (\text{Weight of object (g)})/\{(\text{Thickness of object (cm)})\times(\text{Area of object (cm}^2))\} \qquad \text{[Relation equation 1b]}$$

The apparent density, or generally, bulk density is a measure of how much space per unit volume a material occupies, and includes pores or empty space included in the material. That is, the apparent density includes the material in solid state and pores in its volume. The apparent density may be calculated by dividing the mass of the material by the total volume. All the pores or empty space in the material are included in the apparent density. The formula for calculating the apparent density is given as the following Relation equation 1c.

[Relation equation 1c]

$$\text{Apparent density} = \text{Mass / Total volume}$$

The mass may be measured using a weight. In the case of the material of a regular shape (for example, cube, cylinder, etc.), the corresponding dimension may be measured using a proper tool such as a tapeline or calipers, and this is a well-known method widely used in the corresponding technical field. In the case of the material of an irregular shape, the volume may be measured by measuring the density of a liquid and then measuring a change in known volume. The change in volume may be equal to the volume of the material. Any other known method to those skilled in the art may be applied to measure the volume or the apparent density.

The net density (or true density) refers to the substantial density of the material without taking into account the voids or pores included in the material. This is a value obtained by dividing the mass of the solid material by its real volume, and the empty space is excluded from the volume. The net density may be calculated by dividing the mass of the material by the solid (not empty) volume. The formula for calculating the net density is given as the following Relation equation 1d.

[Relation equation 1d]

$$\text{Net density} = \text{Mass / Solid volume (Pore volume is not taken into account)}$$

Alternatively, the net density may be determined using a gas pycnometer method in accordance with ISO 12154:2014 or any other measurement method known to experts in the corresponding field.

Meanwhile, in an embodiment of the present disclosure, the porosity may be calculated from 3D data obtained through a 3D structure modeling method of the electrode as described below.

Meanwhile, in the present disclosure, the porosity may be better realized by the pore size and the size of the fibrillated binder as described below.

[Pore size]

In the present disclosure, the dry electrode film may have a uniform pore size and a small deviation. Accordingly, this may have a beneficial effect on easy movement and diffusion of lithium ions during charging/discharging and improved fast charging and high output characteristics.

In the dry electrode film according to the present disclosure, the total volume of pores having the diameter of 2 $\mu$m or more and 10 $\mu$m or less may be 90 vol% or more based on 100 vol% of all the pores. For example, it may range from 90 vol% to 99.99 vol%. Preferably, the volume of pores having the diameter of 4 $\mu$m or more and 8 $\mu$m or less may be 60 vol% or more, or 65 vol% or more, or 70 vol% or more based on the total pore volume of the electrode. For example, it may range from 60 vol% to 99.99 vol% or from 65 vol% to 99.99 vol% or from 70 vol% to 99.99 vol%.

In the electrode active material layer, the volume of pores (micropores) having the pore diameter of 0.5 $\mu$m or less, or less than 0.5 $\mu$m may be 10 vol% or less, or 5 vol% or less, or 3 vol% or less or 1 vol% or less based on the apparent volume. Meanwhile, the volume of the micropores may be 0.0001 vol% or more or 0.001 vol% or more within the aforementioned range. Preferably, the volume of pores of 1 $\mu$m or less, or 2 $\mu$m or less or 3 $\mu$m or less may be 10 vol% or less, or 5 vol% or less, or 3 vol% or less or 1 vol% or less. Meanwhile, the volume of the micropores may be 0.0001 vol% or more or 0.001 vol% or more within the aforementioned range. Additionally, in an exemplary embodiment, in the electrode active material layer, the volume of pores (macropores) having the pore diameter of 10 $\mu$m or more may be 10 vol% or less, 7 vol% or less, or 5 vol% or less, or 3 vol% or less, or 1 vol% or less based on the apparent volume. Meanwhile, the volume of the macropores may be 0.0001 vol% or more or 0.001 vol% or more within the aforementioned range.

In the dry electrode film, the number of pores having the diameter of 2 $\mu$m or more and 10 $\mu$m or less, or 4 $\mu$m or more and 8 $\mu$m or less may be 80% or more of the total number of pores. Meanwhile, the number of pores may be 99.99% or less within the aforementioned range.

The pores included in the dry electrode film may have the average pore diameter of 5.0 $\mu$m or more, or 6.0 $\mu$m or more, or 6.5 $\mu$m or more. Meanwhile, the average pore diameter may be 20.0 $\mu$m or less, 13.0 $\mu$m or less, 10.0 $\mu$m or less, or 9.0 $\mu$m or less. Within the aforementioned, the average pore diameter may be 6.0 $\mu$m or more and 10.0 $\mu$m or less. Alternatively, the average pore diameter may be 6.5 $\mu$m or more and 9.0 $\mu$m or less.

The average pore size of pores having the pore diameter of 2 $\mu$m or more and 10 $\mu$m or less in the dry electrode film may be 5 $\mu$m or more, preferably 6.0 $\mu$m or more, and preferably 6.5 $\mu$m or more.

In an embodiment of the present disclosure, in the dry electrode film, the average pore diameter of pores having the diameter of 4 $\mu$m or more and 8 $\mu$m or less may be 6.0 $\mu$m or more, and preferably 6.5 $\mu$m or more. Within the aforementioned range, the average pore diameter of pores having the diameter of 4 $\mu$m or more and 8 $\mu$m or less may be 20.0 $\mu$m or less, 13.0 $\mu$m or less, 10.0 $\mu$m or less, or 9.0 $\mu$m or less. Within the aforementioned range, the average pore diameter may be 6.0 $\mu$m or more and 10.0 $\mu$m or less, or 6.5 $\mu$m or more and 9.0 $\mu$m or less.

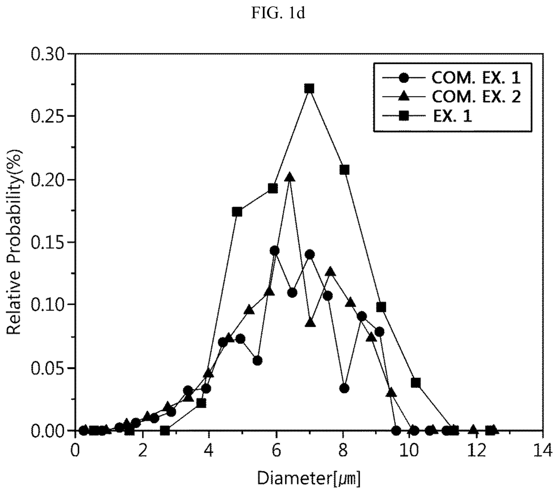

FIG. 1d is a graph showing the pore size and shape distribution of the dry electrode according to Example 1 of the present disclosure, showing a smaller deviation of pore size than Comparative Example. The dry electrode film according to the present disclosure may have a large average pore diameter of 5.0 $\mu$m or more, a low ratio of micropores of less than 4 $\mu$m and macropores of more than 8 $\mu$m and a small deviation of pore size, leading to uniform lithium ion diffusion, and fast movement of lithium ions in the electrode, thereby improving high rate charge/discharge.

In the present disclosure, the pore diameter is based on the longest pore diameter. Additionally, the average pore diameter may be the mean diameter, and may be calculated based on the following Relation equation 2.

[Relation equation 2]

$$\text{Mean diameter} = (\Sigma d / n)$$

In the above Relation equation, $\Sigma d$ is the sum of all the measured pore diameters, and n is the total number of target pores.

In a specific embodiment of the present disclosure, the pores may have flat bar, prolate spheroid, oblate spheroid and sphere. Here, the flat bar shaped pores may be included 35 vol% or more, 40 vol% or more than 40 vol%, 43 vol% or more, or 45 vol% or more based on the total pore volume 100 vol% of the electrode. Meanwhile, the flat bar shaped pores may be 60 vol% or less or 55 vol% or less based on the total pore volume 100 vol%. Meanwhile, the dry electrode film may include the spherical pores less than 5 vol% or less than 3 vol% based on the total pore volume 100% of the electrode. Meanwhile, the spherical pores may be 0.001 vol% or more or 0.01 vol% or more based on the total pore volume 100 vol%.

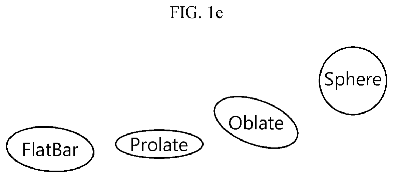

Here, the flat bar, prolate spheroid and oblate spheroid shapes have a value between 0.4 and less than 0.8 on the basis of Krumbein Sphericity, and the spherical shape has a value between 0.8 and 1.0 on the basis of Krumbein Sphericity. Meanwhile, in the present disclosure, the flat bar, prolate and oblate may be classified according to the following ratios of a, b and c. The flat bar is a shape in which b and c are similar but a is larger. Meanwhile, when a and b are similar and c is larger, it is classified as prolate, and when b and c are larger than a, it is classified as oblate. In a specific embodiment, the flat bar represents that a is more than 0.45 and less than 0.6, for example, more than 0.45 and 0.55 or less, preferably 0.5, b is from 0.1 to 0.15, and c is 1-a-b (c=1-a-b). Meanwhile, the prolate represents that a is from 0.6 to 0.65, b is from 0.175 to 0.2, and c is 1-a-b (c=1-a-b), and the oblate represents that a is from 0.40 to 0.45, b is from 0.4 to 0.45 and c is 1-a-b (c=1-a-b). FIG. 1e schematically shows each shape.

In the present disclosure, the Krumbein Sphericity may be calculated through the following Equation 5.

[Equation 5]

$$\text{Krumbein Sphericity} = \sqrt[3]{\frac{bc}{a^2}}$$

Here, a refers to the longest pore diameter (the length of the longest axis), b refers to the length of the intermediate axis of the pore diameter (the length of the intermediate axis), and c refers to the shortest pore diameter (the length of the shortest axis). Here, the flat bar shape refers to the pore having a value between 0.4 and 0.8 on the basis of Krumbein Sphericity, and the sphere shape refers to the pore having a value between 0.8 and 1.0 on the basis of Krumbein Sphericity.

In a specific embodiment of the present disclosure, the pore structure, shape and size such as pore diameter, average pore diameter and volume may be determined by multilayer image measuring of focused ion beam (FIB) scanning electron microscopy (SEM) cross section and turning into 3 dimensions through 3D reconstruction. Alternatively, the pore size and distribution (pore size distribution) may be calculated using a Capillary flow Porometer method. The Capillary flow Porometer method is a method that gets an object wet using a wetting solution having low surface tension, applies pressure using air to push the wetting solution filled in the pores, and measures the pore size and distribution through the pressure required to push the wetting solution filled in the pores.

[Fiber diameter of binder resin in dry electrode film]

In the dry electrode film, the binder resin includes fibrillated fibrils. In the present disclosure, the fibrils may include may include parts having the diameter of 300 nm or more, or 500 nm or more, or 700 nm or more, or 1 $\mu$m or more. Preferably, the fibrillated binder resin may include fibrils, of which parts having the diameter of 300 nm or more have the length of 3 $\mu$m or more, or 5 $\mu$m or more, or 7 $\mu$m or more, or 10 $\mu$m or more, or 15 $\mu$m or more, or 20 $\mu$m or more. Alternatively, the fibrillated binder resin may include fibrils, of which parts having the diameter of 500 nm or more have the length of 3 $\mu$m or more, or 5 $\mu$m or more, or 7 $\mu$m or more, or 10 $\mu$m or more, or 15 $\mu$m or more, or 20 $\mu$m or more. Alternatively, the fibrillated binder may include fibrils, of which parts having the diameter of 700 nm or more have the length of 3 $\mu$m or more, or 5 $\mu$m or more, or 7 $\mu$m or more, or 10 $\mu$m or more, or 15 $\mu$m or more, or 20 $\mu$m or more. Alternatively, the fibrillated binder resin may include fibrils, of which parts having the diameter of 1 $\mu$m or more have the length of 3 $\mu$m or more, or 5 $\mu$m or more, or 7 $\mu$m or more, or 10 $\mu$m or more, or 15 $\mu$m or more, or 20 $\mu$m or more. In a more specific embodiment, the dry electrode film may include at least one fibril in which a part of the fibril having a diameter of 1 $\mu$m or more has a length of 50 $\mu$m or more.

Meanwhile, in the dry electrode film, the diameter of the fibrillated binder resin may be 7 $\mu$m or less, or 5 $\mu$m or less, or 3 $\mu$m or less, or 2 $\mu$m or less. In an embodiment of the present disclosure, the diameter and length of the fibrils may be determined through an SEM image of the manufactured dry electrode film. Additionally, an appropriate image processing program may be further applied to display the binder resin distinguishably from the other component. The image processing program may include known programs such as, for example, Avizo, Image J. In the present disclosure, when the fibril diameter of the binder resin lies in the aforementioned range, it is advantageous in realizing the dry electrode film having a large pore size and a small deviation. Meanwhile, in the dry electrode film, the fibrillation of the binder resin, and the fibril diameter and length by the fibrillation may be controlled through kneading process conditions and/or a calendaring process as described below. For example, they may be adjusted by controlling the rotational speed (rpm) of a kneader machine and/or the kneading time. Alternatively, they may be adjusted by the speed and/or pressure of a calender machine. Meanwhile, as described below, the structural features of the pores of the dry electrode film such as porosity, pore size and shape may be also adjusted by the size of the electrode powder after a grinding process. It will be described in the description of the grinding process.

[QBR]

According to an embodiment of the present disclosure, the dry electrode film may have Quantified Binder Ratio (QBR) between 0.9 and 1.1. In the present disclosure, the dry electrode film that satisfies the QBR value is preferably the dry electrode film for positive electrode.

The QBR is defined by the following [Relation equation 3].

$$[\text{Relation equation 3}]$$

$$QBR = Bs/Bf$$

In the above Equation, Bs denotes the average fluorine content in the electrode active material layer surface area within 15% of the total thickness of the electrode active material layer from the outermost surface of the electrode active material layer, and Bf denotes the average fluorine content in the electrode active material layer bottom area within 15% of the total thickness of the electrode active material layer from the electrode active material layer interface in contact with the current collector.

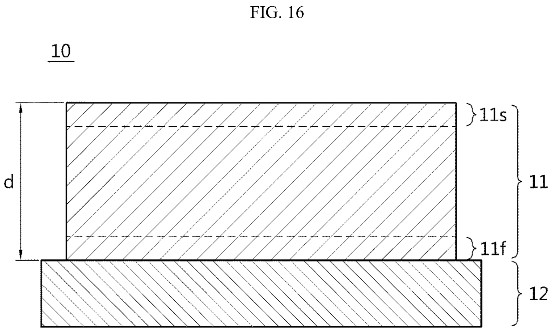

FIG. 16 is a schematic diagram of the electrode according to an embodiment of the present disclosure. Referring to FIG. 16, the electrode 10 includes the electrode current collector 12; and the electrode active material layer 11 located on the electrode current collector 12 and including the active material, the conductive material, the binder, and fluoroelastomer.

On the basis of the total thickness (d), the electrode active material layer 11 has the electrode active material layer surface area 11s within 15% of the total thickness (d) of the electrode active material layer from the outermost surface of the electrode active material layer, and the electrode active material layer bottom area 11f within 15% of the total thickness (d) of the electrode active material layer from the electrode active material layer interface in contact with the current collector.

In the above Equation QBR, Bs denotes the average fluorine content in the electrode active material layer surface area 11s, and Bf denotes the average fluorine content in the electrode active material layer bottom area 11f.

In this instance, QBR may be calculated by the following method.

First, a target electrode for determination of QBR is selected, and a cross section of the selected electrode is prepared using Ar ion milling. Subsequently, Energy Dispersive X-ray Spectroscopy (EDS) mapping of the constituent elements in the electrode active material layer of the electrode cross section is performed using an EDS detector of SEM equipment.

A line profile is extracted from the EDS mapping results in the thickness direction of the electrode active material layer, the average fluorine content Bs of the fluorine-containing binder in the electrode active material layer surface area and the average fluorine content Bf of the fluorine-containing binder in the electrode active material layer bottom area are extracted from the extracted line profile results, and QBR is calculated using the above [Relation equation 3].

In this instance, the electrode active material layer surface area is an area within 15% of the total thickness of the electrode active material layer from the outermost surface in the thickness direction of the electrode active material layer, and the electrode active material layer bottom area is an area within 15% of the total thickness of the electrode active material layer from the electrode active material layer interface in contact with the current collector.

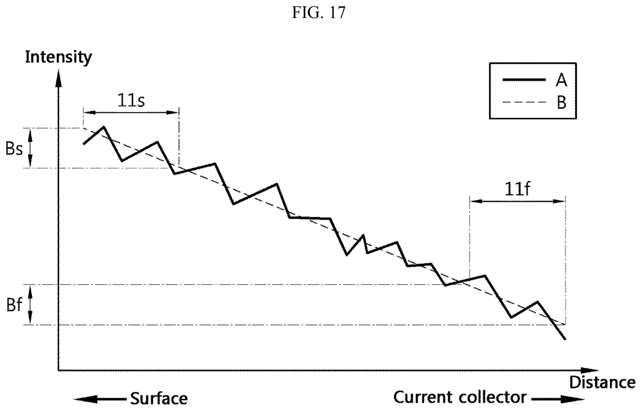

FIG. 17 is a schematic diagram showing the calculation of the QBR value of the electrode active material layer. Referring to FIG. 17, the X axis indicates the thickness of the electrode active material layer, i.e., a distance from the surface to the current collector, and the Y axis indicates the fluorine intensity. The A line indicates the fluorine intensity of the fluorine-containing binder extracted by EDS mapping of fluorine in the electrode active material layer of the electrode cross section, and the line B is a trendline showing a trend of the line A by locally weighted scatterplot smoothing (LOWESS).

The QBR value indicates the uniformity in the distribution of the fluorine-containing binder in the electrode active material layer along the thickness direction through a ratio of the amount of the fluorine-containing binder included in the surface area to the amount of the fluorine-containing binder included in the bottom area of the electrode active material layer. In this instance, the amount of the fluorine-containing binder may be inferred through fluorine contained in the fluorine-containing binder used.

The QBR value may be 1.1 or less, and according to an embodiment of the present disclosure, the QBR value may be 0.95 or more, 0.97 or more, 1.03 or less, 1.05 or less, and may range from 0.95 to 1.05.

When the QBR value lies in the range of 1.1 or less, it may be possible to prevent the increase in the ratio of the amount of the fluorine-containing binder included in the surface area to the amount of the fluorine-containing binder included in the bottom area of the electrode active material layer due to the migration of the fluorine-containing binder to the electrode surface, leading to uniform binder distribution in the thickness direction of the electrode active material layer, in which the binder content in the area close to the current collector is not low, thereby improving the adhesion strength between the current collector and the electrode active material layer, and increasing the conductivity on the electrode active material layer surface and the charging/discharging rate as well.

[Tortuosity]

In an embodiment of the present disclosure, the dry electrode film preferably has Geodesic tortuosity $\tau_{geo}$ of 1.15 or less, as given by the following [Equation 1].

The geodesic tortuosity may indicate the length of the lithium ion movement path by the pores in the electrode. Accordingly, to reduce the lithium ion movement path, a value of $\tau_{geo}$ is preferably 1.15 or less.

[Equation 1]

$$\tau_{geo} = \frac{L_{eff}}{L}$$

In the above [Equation 1], L denotes the thickness of the electrode active material layer, $L_{eff}$ denotes the length of the lithium ion movement path in the electrode active material layer.

In the present disclosure, the geodesic tortuosity $\tau_{geo}$ may be determined by modeling the electrode active material layer in 3 dimensions using a 3D structure modeling tool and calculating the movement path based on it.

The 3D modeling may include, for example, obtaining a plurality of cross sections of the composite electrode using FIB and SEM, and converting to a 3D structure to analyze the contact area between particles, the pore structure, etc. Alternatively, analysis may be conducted by extracting the internal structure of the composite electrode in 3D using Micro/Nano Computed Tomography (CT). Alternatively, 3D electrode structure formation, analysis modeling and simulation tools such as GeoDict, AVIZO, MATBOX may be used.

In an embodiment of the present disclosure, the method using FIB and SEM may be described in detail below.

First, the electrode sample may be processed through a light source selected from Ga+, Plasma, or Laser according to the sample volume of the electrode. For example, to obtain an image at a nanometer level of resolution, the sample may be processed by cutting the electrode using the light source of Ga+, and to obtain an image at a micrometer level of resolution, the sample may be processed by cutting the electrode using the plasma or laser light source. In this instance, the cutting speed and interval of the electrode sample may be adjusted by setting the voltage and current of the FIB equipment.

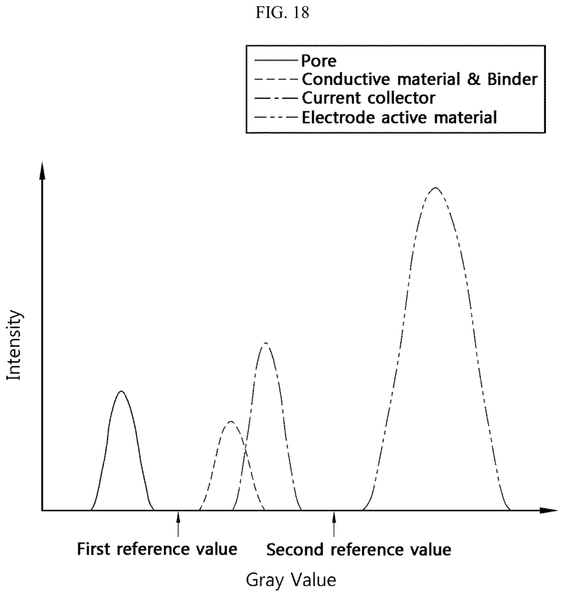

As described above, the sample image of the electrode obtained using the FIB equipment may be an SEM image showing the cross section of the electrode sample. The SEM image may be represented in different brightness for each electrode element included in the electrode, for example, the electrode active material, the conductive material, the binder, the pores in the electrode, and the aluminum current collector. FIG. 18 is a graph exemplarily showing the gray value for each material of the electrode obtained using the FIB equipment. Referring to FIG. 18, it is confirmed that the pore in the electrode and each electrode material show different gray values.

Subsequently, the obtained electrode cross section SEM image may go through processing, for example, contrast adjustment using a Fast Fourier Transform (FFT) filter or a non-Local Means (NLM) filter, and as a result of image data processing, digital data of the remodeled 3D structure may be obtained.

The digital data may be visualized into a 2D or 3D graphical image, and provide a variety of numerical information associated with the electrode structure. After remodeling the 3D structure of the electrode, $L_{eff}$ is calculated based on it.

In an embodiment of the present disclosure, the $\tau_{geo}$ may be calculated using a neurite tracer program based on FiJi/Image J, and the calculation is based on the following Equation 3.

[Equation 3]

$$\tau_{geo} = \frac{\Sigma_{i=0}^{n} \theta_i dl_i}{L}$$

[Equation 4]

$$\theta_i = \cos^{-1}\left(\frac{v_{ix}v_{(i+1)x} + v_{iy}v_{(i+1)y} + v_{iz}v_{(i+1)z}}{\left(\sqrt{v_{ix}^2 + v_{iy}^2 + v_{iz}^2} + \sqrt{v_{(i+1)x}^2 + v_{(i+1)y}^2 + v_{(i+1)z}^2}\right)}\right)$$

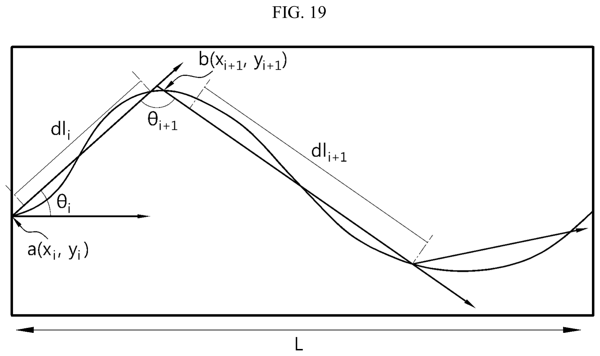

In the above [Equation 3], L refers to a predetermined straight line length in a random direction, and in the above length L, $dl_i$ refers to the length component corresponding to each deflection angle. Each deflection angle may be calculated by an angle between two vectors in 3D space for each path and each path may be defined through the tracer program used. Additionally, the deflection angle may be defined by the above [Equation 4]. For each variable in the above [Equation 3] and [Equation 4], reference may be made to FIG. 19, and in the above Equation 4, v denotes the vector, to be specific, the vector $v_i$ at a certain position and the vector $v_{i+1}$ at the relative position to $v_i$, and x, y and z denote each component of the vector.

For the method for calculating the $\tau_{geo}$, reference may be made to IOP Conf. Series: Earth and Environmental Science 311 (2019) 012041"," doi:10.1088/1755-1315/311/1/012041.

Meanwhile, the above [Equation 1] and [Equation 2] may be analyzed as follows. The 3D electrode structure remodeled by the above-described method is made out of voxels, and a set of voxels of pores connecting surfaces in the thickness direction of the electrode is found through a calculation algorithm, and a value of $L_{eff}$ is calculated on the basis of a set of shortest pore voxels (a smallest number of voxels). In this instance, it may be calculated by multiplying the edge value of the voxel by the number of connected voxels between surfaces.

Further, the dry electrode film preferably has physical tortuosity $\tau_{phy}$ of 3 or less, as given by the following [Equation 2]. In the battery including the dry electrode film according to the present disclosure, the tortuosity is affected by the ionic conductivity of the electrolyte solution injected into the battery. Accordingly, when considering the physical tortuosity value, it is preferable to take into account the bottleneck phenomenon inside the electrode by the electrolyte solution.

[Equation 2]

$$\tau_{phy} = \sqrt{\varepsilon \frac{\sigma_0}{\sigma_{eff}}}$$

In the above [Equation 2], $\varepsilon$ denotes the porosity of the electrode active material layer, $\sigma_0$ denotes the electrolyte conductivity, and $\sigma_{eff}$ denotes the effective electrolyte conductivity by the pore structure.

In the present disclosure, the porosity $\varepsilon$ may be calculated from the pore volume calculated through 3D remodeling.

The electrolyte conductivity $\sigma_0$ may be calculated by calculating interactions between electrolyte molecules and lithium ions. In an embodiment of the present disclosure, the electrolyte conductivity $\sigma_0$ may be set on the basis of Advanced Electrolyte Model (AEM) which is a statistical mechanics model based on NPNRAMSA (Mean Spherical Approximation) developed by Kevin Gering at Idaho National Laboratory (Journal of The Electrochemical Society, 165 (14) A3350-A3359 (2018)). The AEM may calculate a variety of characteristics (viscosity, ionic conductivity, diffusivity, transport number and activity coefficients, etc.) of the electrolyte through interactions (solvent-solvent, solvent-ion, ions) by modeling the molecular scale.

Meanwhile, the effective ionic conductivity $\sigma_{eff}$ of the electrode of the present disclosure may be calculated by applying the following Equations (a) to (c) (Laplace's equation and Ohm's law equation) to the calculated 3D remodeling structure.

$$\text{(a)} \quad \nabla(\sigma_L \nabla \varphi_L) = 0$$

$$\text{(b)} \quad j_L = -\sigma_L \nabla \varphi_L$$

$$\text{(c)} \quad \sigma_{eff} = \frac{1}{v} \int \frac{j_L}{\varphi_L} dV$$

In the above Equations (a) to (c), $\sigma_L$ is local conductivity (S·m$^{-1}$), $j_L$ is local current density (A·m$^{-1}$), $\varphi_L$ is local potential V, $\sigma_{eff}$ is effective conductivity (S·m$^{-1}$), and V is pore volume (m$^3$).

[Loading amount]

In the present disclosure, the loading amount of the electrode active material in the dry electrode film may range from 3 mAh/cm$^2$ to 15 mAh/cm$^2$, and specifically from 4 mAh/cm$^2$ to 10 mAh/cm$^2$. Here, the loading amount of the active material may be calculated by the following [Relation equation 4].

Loading amount (mAh/cm$^2$) = Capacity of the active material (mAh/g) x Weight content ratio of the active material in the dry electrode film (wt%) x Weight per unit area of the dry elec-        [Relation equation 4]
trode film (g/cm$^2$)

[Binder resin]

In the present disclosure, the binder resin is not limited to a particular type and may include any type of binder resin that can be fibrillated through the step (S10) and/or the step (S20) as described below. The fibrillation refers to treatment, causing the polymer to break into smaller pieces, and for example, may be performed using a mechanical shear force. The fibrillated polymer fibers may become loose in the surface and/or body to produce a lot of fine fibers (fibrils). Non-limiting examples of the binder resin may include polytetrafluoroethylene (PTFE), polyvinylidene fluoride (PVDF), polyolefin or a mixture of two or more of them, specifically, the binder resin may comprise polytetrafluoroethylene (PTFE), and more specifically, the binder resin may be polytetrafluoroethylene (PTFE). Specifically, the polytetrafluoroethylene (PTFE) may be included in an amount of 30 wt% or more on the basis of the total weight of the binder resin. Meanwhile, in this instance, in addition to the above-described substances, the binder resin may further include polyethylene oxide (PEO) and/or polyvinylidene fluoride-co-hexafluoropropylene (PVdF-HFP).

[Electrode active material]

In the present disclosure, the dry electrode may be a positive electrode, and the electrode active material may be a positive electrode active material.

The positive electrode active material is not limited to a particular material and may include any type of lithium transition metal oxide, lithium metal iron phosphate or metal oxide. The positive electrode active material may include at least one of layered compounds such as lithium cobalt oxide ($LiCoO_2$), lithium nickel oxide ($LiNiO_2$) or compounds with one or more transition metal substitution; lithium manganese oxide of Formula $Li_{1+x}Mn_{2-x}O_4$ (where x ranges from 0 to 0.33), $LiMnO_3$, $LiMn_2O_3$, $LiMnO_2$; lithium copper oxide ($Li_2CuO_2$); vanadium oxide such as $LiV_3O_8$, $LiFe_3O_4$, $V_2O_5$, $Cu_2V_2O_7$; Ni site lithium nickel oxide represented by Formula $LiNi_{1-x}M_xO_2$ (M = Co, Mn, Al, Cu, Fe, Mg, B or Ga, x ranges from 0.01 to 0.5), for example, $Li(Ni,Co,Mn,Al)O_2$ with the Ni content of 50% or more in the metal fraction except Li; lithium manganese composite oxide represented by Formula $LiMn_{2-x}M_xO_2$ (M = Co, Ni, Fe, Cr, Zn or Ta, x ranges from 0.01 to 0.1) or $Li_2Mn_3MO_8$ (M = Fe, Co, Ni, Cu or Zn); $LiMn_2O_4$ with partial substitution of alkali earth metal ion for Li in the Formula; lithium metal phosphate $LiMPO_4$ (M = Fe, CO, Ni, or Mn), disulfide compounds; $Fe_2(MoO_4)_3$. However, the positive electrode active material is not limited thereto.

Alternatively, the dry electrode may be a negative electrode, and in this instance, the electrode active material may be a negative electrode active material. The negative electrode active material may include carbon such as nongraphitizing carbon or graphite-based carbon; metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Groups 1, 2 and 3 elements in the periodic table, halogen; $0 \leq x \leq 1$; $1 \leq y \leq 3$; $1 \leq z \leq 8$); lithium metals; lithium alloys; silicon-based alloys; tin-based alloys; silicon-based oxide such as SiO, SiO/C, $SiO_2$; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymer such as polyacetylene; Li-Co-Ni based materials. In the present disclosure, the electrode may be preferably a positive electrode.

[Conductive material]

The conductive material is not limited to a particular type and may include any material having conductive properties without causing any chemical change in the corresponding battery. For example, the conductive material may include graphite such as natural graphite or artificial graphite; carbon black such as carbon black, acetylene black, Ketjen black, channel black, furnace black, lamp black or thermal black; conductive fibers such as carbon fibers or metal fibers; fluorocarbon; metal powder such as aluminum or nickel powder; conductive whiskers such as zinc oxide or potassium titanate; conductive metal oxide such as titanium oxide; conductive materials such as polyphenylene derivatives, and specifically, for homogeneous mixing of the conductive material and improved conductivity, the conductive material may include at least one selected from the group consisting of activated carbon, graphite, carbon black and carbon nanotubes, and more specifically, activated carbon.

[Current collector]

The current collector is not limited to a particular type and may include those having high conductivity without causing any chemical change in the battery. For example, the current collector may include, for example, stainless steel, aluminum, nickel, titanium, sintered carbon, copper or aluminum or stainless steel treated with carbon, nickel, titanium or silver on the surface. The current collector may have microtexture on the surface to increase the adhesion strength of the positive electrode active material, and may come in various forms, for example, a film, a sheet, a foil, a net, a porous body, a foam or a nonwoven.

Further, all or part of the current collector may be coated with a conductive primer to reduce the resistance and improve the adhesion strength on the surface. Here, the conductive primer may include a conductive material and a binder, and the conductive material may include any material having conductive properties without limitation. The conductive material may include, for example, carbon-based materials. The binder may include fluorine-based binders (including PVDF and PVDF copolymer) that are soluble in the solute, acrylic binders and aqueous binders.

[Amount]

In an embodiment of the present disclosure, each of the electrode active material, the binder resin and the conductive material may be included in the electrode active material layer at a weight ratio of from 80 wt% to 98 wt%, from 0.5 wt% to 10 wt% and from 0.5 wt% to 10 wt%, respectively. To this end, the powdery blend may include the electrode active material, the binder resin and the conductive material at the weight ratio of from 80 wt% to 98 wt%, from 0.5 wt% to 10 wt% and from 0.5 wt% to 10 wt%, respectively. In a specific embodiment, the binder resin may be included in a range between 0.5 wt% and 5 wt% or between 0.5 wt% and 3 wt% based on 100 wt% of the electrode active material layer. In the present disclosure, the amount of the electrode components is not limited to a particular range and may be properly adjusted to achieve a desired level of electrochemical performance of the battery.

When the amount of the binder resin is too large, the average pore diameter in the obtained electrode active material layer may be small. Additionally, when the amount of the binder resin increases, the amount of the electrode active material decreases, resulting in low energy density, and the binder resin may act as the resistance component, resulting in poor resistance characteristics. In contrast, when the amount of the binder resin is too small, adequate fibrillation may fail, and agglomeration may be not enough to form a bulk blend, making it difficult to manufacture the dry electrode film or the properties of the dry electrode film may degrade. When the fibrillation of the binder is inadequate, it may not be easy to achieve the above-described features in terms of porosity and pore structure.

When the amount of the conductive material is too large, the capacity may decline due to the smaller amount of the active material, and when the amount of the conductive material is too small, sufficient conductivity may not be achieved or the properties of the dry electrode film may degrade.

If necessary, the electrode active material layer may include fillers to suppress the expansion of the electrode. The fillers are not limited to a particular type and include any fibrous material that does not cause any chemical change in the corresponding battery, for example, olefin-based polymer such as polyethylene or polypropylene; and fibrous materials such as glass fibers or carbon fibers. The fillers are preferably included in an amount of 5 wt% or less, or 3 wt% or less or 1 wt% or less based on 100 wt% of the electrode active material layer.

Meanwhile, the present disclosure provides a secondary battery including the dry electrode, wherein the dry electrode is a positive electrode, and an electrode assembly including the positive electrode, a negative electrode and a separator is accommodated in a battery case together with a lithium-containing nonaqueous electrolyte, and an energy storage system including the secondary battery as a unit battery. In this instance, the detailed structure of the secondary battery and the energy storage system is well known in the art, and its description is omitted.

[Electrode manufacturing method]

A second aspect of the present disclosure relates to a method for manufacturing the electrode according to the present disclosure.

In a specific embodiment, the method for manufacturing the electrode includes:

(S10) the step of preparing a powdery blend including the electrode active material, the conductive material, and the binder resin;
(S20) the step of kneading the powdery blend to prepare a bulk blend;
(S30) the step of grinding the bulk blend to obtain an electrode powder including mixture particles; and
(S40) the step of calendaring the electrode powder to obtain a free standing type dry electrode film.

The step (S20) may be performed in a temperature range between 70°C and 200°C.

As described below, the dry electrode film may be attached to one or two surfaces of the electrode current collector to manufacture the electrode (S50).

In an embodiment of the present disclosure, a lamination step of placing the dry electrode film obtained through the calendaring step on at least one surface of the current collector and applying pressure may be performed. By the lamination, the dry electrode film may be placed on the current collector and pressure may be applied to join the current collector and the dry electrode film together and through this, the electrode is manufactured. A pressing member such as a lamination jig or a roller may be used. The pressing may be performed by a hot melt pressing method, and for example, when the lamination roller is used, the temperature of the roller may be controlled in a range between 20°C and 200°C.

Hereinafter, the method for manufacturing the dry electrode according to the present disclosure will be described in more detail.

First, the blend including the electrode active material, the conductive material, and the binder resin is prepared (S10). In this step, the electrode materials are mixed in a powder phase by a dry method without using a solvent. The method used is not limited to a particular one and a variety of methods for homogeneous mixing may be applied. In a specific embodiment, the electrode materials may be fed into a mixer or a blender and mixed together in a powder phase.

In an embodiment of the present disclosure, the mixing time is not limited to a particular range but the mixing may be performed for 1 second to 10 minutes. Meanwhile, the mixing speed is not limited to a particular range, but may be properly controlled in a range between about 3000 rpm and 30000 rpm. In a specific example, the mixing may be performed in the mixer at 5,000 rpm to 20,000 rpm for 30 seconds to 2 minutes, specifically at 10,000 rpm to 15,000 rpm for 30 seconds to 1 minute to ensure high uniformity.

As described below, the binder resin is mainly fibrillated through the step (S20). However, coarse fibrillation in parts of the binder resin may be performed in the step (S10).

Subsequently, the kneading process is performed on the obtained powdery blend (S20).

In a specific embodiment of the present disclosure, the kneading may be, for example, performed through a kneader. As the binder resin is fibrillated by the kneading, the electrode active material and the conductive material may be bonded or connected to obtain the bulk blend.

In the present disclosure, the kneading of the step (S20) may be controlled in a range between 10 rpm and 100 rpm. For example, within the aforementioned range, the kneading may be controlled to the speed of 20 rpm or more or 70 rpm or less. The kneading may be performed for 1 minute to 30 minutes. For example, within the aforementioned range, the kneading may be performed at 20 rpm to 70 rpm for 3 minutes to 10 minutes.

The kneading may be controlled in a shear rate range between 5/s and 1000/s. In a specific embodiment of the present disclosure, the kneading may be performed for 1 minutes to 30 minutes and the shear rate may be controlled in a range between 10/s and 500/s. Meanwhile, the kneading process may be performed under the atmospheric pressure or above, specifically the pressure between 1 atm and 3 atm, and more specifically between 1.1 atm and 3 atm.

In the present disclosure, the kneading step may be performed in high temperature and atmospheric pressure or above, and more specifically, in the higher pressure condition than the atmospheric pressure. More specifically, the kneading may be performed in a range between 70°C and 200°C, and specifically, between 90°C and 150°C.

In the present disclosure, the kneading process may be adjusted to achieve the above-described pore characteristics of the dry electrode film such as porosity, pore size and pore distribution.

For example, outside of the aforementioned range, when the kneading step is performed at low temperature, the mixture powder and/or the dry electrode film may have low level of fibrillation of the binder resin or fail to form fibers of large diameter. For example, the mixture powder may fail to form fibers that are 700 nm or more, or 1 $\mu$m or more, or 1.2 $\mu$m or more, or 1.5 $\mu$m or more in diameter. For example, the dry electrode film may fail to form fibers of the binder resin that are 300 nm or more, or 500 nm or more, or 700 nm or more, or 1 $\mu$m or more in diameter. Alternatively, the dry electrode film may fail to form fibers that are 5 $\mu$m or more long in the diameter range of 300 nm or more, or 500 nm or more, or 700 nm or more, or 1 $\mu$m or more. Alternatively, the electrode mixture powder may fail to form fibers that are 5 $\mu$m long in the diameter range of 700 nm or more, or 1.0 $\mu$m or more, or 1.2 $\mu$m or more, or 1.5 $\mu$m or more. When the fibrillated binder resin is small in diameter and/or length, the diameter deviation may increase, or the ratio of too small and/or too large pores may increase. Additionally, binder fibrillation and agglomeration by kneading is inadequate, and a film is not easily formed during calendering. Meanwhile, when the kneading is performed at too high temperature, binder fibrillation occurs rapidly and subsequently the already formed fibers may be broken by too high shear force.

In an embodiment of the present disclosure, outside the aforementioned range, when the kneading is performed under too high pressure, the formed fibers may be broken due to the application of excessive shear force and pressure or the density of the bulk blend may be too high.

According to an exemplary embodiment of the present disclosure, when the high temperature and low shear mixing process is performed as described above, it is advantageous in achieving the intended effect of the present disclosure. Meanwhile, if necessary, the kneading may be performed in the higher pressure condition than the atmospheric pressure.

Subsequently, the bulk blend prepared through the kneading step is ground to obtain the electrode powder (S30).

Specifically, the bulk blend prepared through the kneading may be directly calendered, but in this case, the bulk blend may be pressed at strong pressure and high temperature into a thin film shape, and as a consequence, the density of the film increases too high or a uniform film is not obtained. According to the present disclosure, the prepared bulk blend goes through the grinding step.

In this instance, the grinding may be performed using a known grinding/milling machine such as a blender or a grinder, but is not limited thereto. In a specific embodiment of the present disclosure, the grinding may be controlled in a speed range between 3000 rpm and 30,000 rpm. For example, the grinding speed may be 20000 rpm or less, or 15000 rpm or less, or 12000 rpm or less. Meanwhile, the grinding time may be properly controlled in a range between 1 second and 10 minutes. For example, the grinding time may be 7 minutes or less, or 5 minutes or less, or 3 minutes or less, or 1 minute or less. However, the grinding speed and time is not necessarily limited to the aforementioned range. As a specific example, the grinding may be performed at 5000 rpm to 20000 rpm for 30 seconds to 10 minutes, or at 10000 rpm to 18000 rpm for 30 seconds to 1 minute.

Outside of the aforementioned range, when the grinding is performed at too low rpm or for a short grinding time, the grinding may be inadequately performed to produce the mixture particles of improper size to form a film. In contrast, when the grinding is performed at too high rpm or for a long grinding time, a lot of fine powder of small mixture particles may be produced.

[Mixture particles]

In an embodiment of the present disclosure, the electrode powder obtained through the grinding process may be an assembly of mixture particles, and the mixture particles may have the particle size D50 of from 100 $\mu$m to 700 $\mu$m, and the particle size D50 may be properly adjusted within the aforementioned range in view of the electrical and chemical properties of the battery to which the dry electrode according to the present disclosure is applied. In a specific embodiment, the particle size D50 of the mixture particles may be about 150 $\mu$m or more, or 200 $\mu$m or more, or 250 $\mu$m or more, or 350 $\mu$m or more. Meanwhile, the particle size D50 of the mixture particles may be 650 $\mu$m or less, or 600 $\mu$m or less, or 550 $\mu$m or less, or 500 $\mu$m or less. The particle size D50 of the mixture particles may be adjusted by the rpm and/or time of the grinder process. The mixture particles are the result of agglomeration including the electrode active material particles and the fibrillated binder resin. The electrode powder including the mixture particles is formed into the dry electrode film having a predetermined thickness by calendering in the subsequent process.

Meanwhile, in an embodiment of the present disclosure, the diameter of the binder fibers in the mixture particles may be 700 nm or more, or 1.0 $\mu$m or more, or 1.2 $\mu$m or more, or 1.5 $\mu$m or more. Meanwhile, the diameter of the binder fibers in the mixture particles is not limited to a particular range but may be 10 $\mu$m or less, or 7 $\mu$m or less, or 5 $\mu$m or less, or 3 $\mu$m or less, or 2 $\mu$m or less. Meanwhile, in an embodiment of the present disclosure, the fibrillated binder resin in the mixture particles may include fibrils, of which parts having the diameter of 700 nm or more have the length of 3 $\mu$m or more, or 5 $\mu$m or more, or 7 $\mu$m or more, or 10 $\mu$m or more, or 15 $\mu$m or more, or 20 $\mu$m or more. Alternatively, the fibrillated binder resin may include fibrils, of which parts having the diameter of 1.0 $\mu$m or more have the length of 3 $\mu$m or more, or 5 $\mu$m or more, or 7 $\mu$m or more, or 10 $\mu$m or more, or 15 $\mu$m or more, or 20 $\mu$m or more. Alternatively, the fibrillated binder resin may include fibrils, of which parts having the diameter of 1.2 $\mu$m or more have the length of 3 $\mu$m or more, or 5 $\mu$m or more, or 7 $\mu$m or more, or 10 $\mu$m or more, or 15 $\mu$m or more, or 20 $\mu$m or more. Alternatively, the fibrillated binder resin may include fibrils, of which parts having the diameter of 1.5 $\mu$m or more have the length of 3 $\mu$m or more, or 5 $\mu$m or more, or 7 $\mu$m or more, or 10 $\mu$m or more, or 15 $\mu$m or more, or 20 $\mu$m or more. The diameter and length of the binder resin may be controlled in the above-described kneading process and/or grinding process.

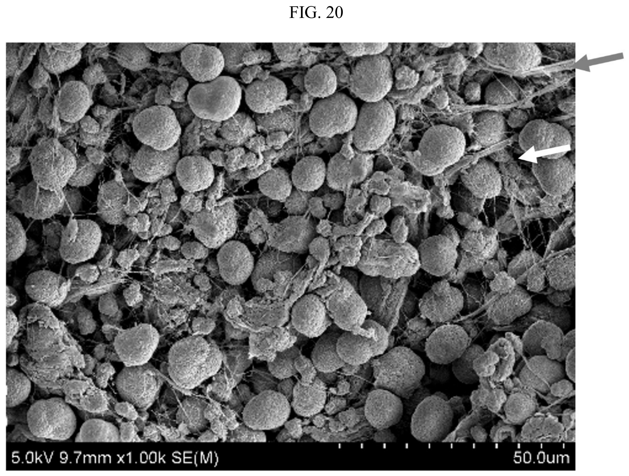

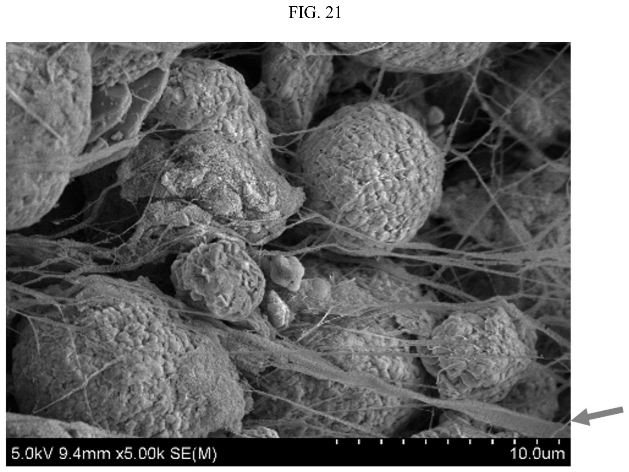

FIGS. 20 and 21 show SEM images of the mixture powder prepared through Example 1 of the present disclosure. Referring to FIGS. 20 and 21, the electrode active material particles and the binder resin included in the mixture powder are observed, and fibrils having the diameter of 1 $\mu$m or more and the length of 5 $\mu$m or more are found in the binder resin.

In the present disclosure, the electrode powder may include the mixture particles, and the amount of the mixture particles may be 95 wt% or more or 99 wt% or more. The mixture particles preferably include the electrode active material and the binder resin, and when the conductive material is included when preparing the blend, the mixture particles may further include the conductive material. Meanwhile, the electrode powder may include small amounts of electrode active material, binder resin and conductive material in free state, not included in the mixture particles.

When the electrode powder is obtained by the above-described method, the dry electrode is manufactured using the powder electrode. Specifically, the electrode powder after the completion of the grinding step may be calendered to manufacture the dry electrode film (S40).

In the present disclosure, the calendaring is compaction of the electrode powder into a film shape by rolling. The obtained dry electrode film may be, for example, 40 $\mu$m to 300 $\mu$m in thickness. In an embodiment of the present disclosure, the calendaring may be performed using a calender machine including a roll press section with two rollers arranged facing each other. The calender machine may include at least one roll press section. For example, a plurality of roll press sections may be continuously arranged to carry out multi-stage powder compaction. As described above, the calendaring process may be performed multiple times to manufacture the dry electrode film of the intended thickness by calendaring the mixture particles. Meanwhile, the temperature of the rollers may range from 50°C to 200°C. Along with this or independently of this, a rotational speed ratio of the two rollers in the roll press section may be controlled to the ratio of 1:1 to 1:3.

Meanwhile, in a specific embodiment of the present disclosure, the degree of crystallinity of the binder resin in the dry electrode film may be more than 0% and 10% or less, and may be, for example, in a range of 5% or less. The degree of crystallinity may be measured through differential scanning calorimetry (DSC), and is based on temperature (peak temperature) at the time of highest enthalpy in crystallization. Specifically, the degree of crystallinity is a % ratio obtained by dividing an enthalpy of fusion ($\triangle H_m$) value actually measured by DSC by an enthalpy of fusion ($\triangle H_m^0$) (equilibrium heat of fusion) value of a theoretically perfect crystal (degree of crystallinity 100%) and may be calculated by the following Relation equation 5. Here, for the enthalpy of fusion value ($\triangle Hm0$) of the theoretically perfect crystal, reference may be made to polymer handbook (J. Brandrup et al., 2003) or Polymer Journal. For example, the enthalpy of fusion value of the theoretically perfect crystal of PTFE is 85.4J/g (Polymer Journal Vol. 46 (2005) 8872~8882). Meanwhile, thermal analysis for polymer by DSC may be commonly measured and calculated in accordance with ASTM D3418-21.

[Relation equation 5]

$$\text{Degree of crystallinity (\%)} = (\triangle H_m \ \div \triangle H_m^0) \ \text{x } 100$$

After the calendaring step is performed, the free standing type dry electrode film may be obtained, and may be used as the electrode active material layer.

Because it does not include a solvent, the dry electrode film manufactured as described above has no or little flowability, and thus is easy to handle and may be formed into a desired shape for use in the manufacture of various types of electrodes. In addition, when the dry electrode film of the present disclosure is used to manufacture the electrode, a drying process for solvent removal may be omitted, thereby greatly improving the electrode manufacturing process efficiency, and solving the problems encountered in the manufacture of dry electrodes such as fine powder of the active material or breakage of the fibrillated binder.

Meanwhile, in a specific embodiment of the present disclosure, there is provided a system for manufacturing the dry electrode. The system includes a blender machine to mix the raw materials including the active material, the conductive material and the binder resin; a kneader machine to knead the mixture to form the bulk blend; a grinder machine to grind the bulk blend to form the electrode powder; a calender machine to form the electrode powder into the dry electrode film; and a laminator machine to laminate the dry electrode film onto the current collector.

Meanwhile, the blender machine is used to mix the raw materials, and as described above, may mix the raw materials of the mixture at the speed of 3,000 rpm to 30,000 rpm.

The kneader machine produces the bulk blend through the kneading and performs the fibrillation of the binder. For this purpose, the kneader machine may be set to a range between 70°C and 200°C, and the higher pressure condition than the atmospheric pressure. Specifically, the kneader machine may be set to a range between 90°C and 150°C, and the pressure condition of 1 atm to 3 atm, and more specifically the pressure condition of 1.1 atm to 3 atm.

The grinder machine is used to grind the bulk blend obtained by the kneader machine to form the electrode powder, and may include, for example, a blender or a grinder.

The calender machine is a forming machine used to compact the electrode powder into a film shape. In a specific embodiment of the present disclosure, the calender machine may include a roll press section with two rollers arranged facing each other, and a plurality of roll press sections may be continuously arranged to carry out multi-stage powder compaction.

The laminator machine is used to attach the dry electrode film formed by the calender machine to at least one surface of the current collector and roll it, and may include, for example, a roll press machine.

The porosity of the dry electrode and the dry electrode film according to the present disclosure may be determined by the calender machine and the laminator machine. The detailed structure of the blender machine, the kneader machine, the calender machine and the laminator machine is well known in the art, and its description is omitted.

Hereinafter, the present disclosure will be described in detail based on Example, Comparative Example and Experimental Example according to the present disclosure to help those skilled in the art to easily understand the present disclosure.

Preparation Example 1: **Pre-mixing** of materials

As a positive electrode active material, $Li(Ni_{0.85}Mn_{0.05}Co_{0.05}Al_{0.05})O_2$, carbon black and polytetrafluoroethylene (PTFE) were fed into a mixer at a weight ratio of 96:1:3 and mixed at 15000 rpm for 1 minute to prepare a powder blend.

Preparation Example 2: Preparation of electrode powder A

The temperature of the kneader was stabilized to 150°C, the obtained pre-mixed powder blend was fed into the kneader which in turn, operated at 25 rpm for 3 minutes under the pressure of 1.1 atm to obtain a bulk blend. The bulk blend was fed into the grinder to grind at 10,000 rpm for 30 seconds to obtain an electrode powder. The diameter of the obtained mixture particles was from about 300 $\mu$m to 700 $\mu$m and D50 was about 500 $\mu$m. FIGS. 20 and 21 are SEM images of the electrode powder prepared through Example 1 of the present disclosure. Referring to FIGS. 20 and 21, fibrils 1 $\mu$m or more in diameter and 5 $\mu$m or more in length were found.

Preparation Example 3: Preparation of electrode powder B

A dry electrode was manufactured by the same method as the powder A except that the bulk blend was obtained by the operation of the kneader at 25 rpm for 4.5 minutes.

Preparation Example 4: Preparation of electrode powder C

A dry electrode was manufactured by the same method as the powder A except that the bulk blend was obtained by the operation of the kneader at 25 rpm for 2.5 minutes.

Preparation Example 5: Preparation of electrode powder **D**

A dry electrode was manufactured by the same method as the powder A except that the bulk blend was obtained by the operation of the kneader at 50 rpm for 20 minutes.

Preparation Example 6: Preparation of electrode powder E

The temperature of the kneader was stabilized to 150°C, the obtained pre-mixed powder blend was fed into the kneader which in turn, operated at 25 rpm for 3 minutes under the pressure of 1.1 atm to obtain a bulk blend. The bulk blend was fed into the grinder to grind at 10,000 rpm for 2 minutes to obtain an electrode powder. It was confirmed that the D50 of the obtained mixture particles was about 150 $\mu$m.

[TABLE 1 ]

|  | D50($\mu$m) | Tap density | | Bulk density | |
| --- | --- | --- | --- | --- | --- |
|  |  | Value (g/cc) | Relative to powder blend (%) | **Value** (g/cc) | Relative to powder blend (%) |
| Powder blend premixing |  | 1.698 |  | 0.827 |  |
| Powder A | 500 | 1.294 | 76% | 0.840 | 102% |
| Powder B | 488 | 1.394 | 82% | 0.909 | 110% |
| Powder C | 494 | 1.249 | 74% | 0.826 | 100% |
| Powder D | 365 | 1.978 | 116% | 1.203 | 145% |
| Powder E | 152 | 1.458 | 86% | 0.752 | 91% |

For each powder obtained in the Preparation Example, tab density and bulk density were measured and the measurements are shown in the above TABLE 1. The same powder blend was used, but it was confirmed that there was a significant difference in characteristics between the electrode powder depending on the applied powder preparation conditions such as the kneading process or the grinding process.

The bulk density is a density based on volume including pores between particles when a vessel is filled with the electrode powder and refers to apparent density in non-tapped or non-packed condition. In the present disclosure, the bulk density was measured using a powder measurement machine (Powerpro AI, Better size instrument) in accordance with ISO3953:1993. Specifically, powder was poured and dispersed in a 250 ml mass cylinder by free fall, then excess powder accumulated on top of the mass cylinder was removed by a spatula, and the weight of the powder inside was measured, and the bulk density was calculated according to the following Equation.

Bulk density = (Internal weight (g)) / (Volume of mass cylinder filled with electrode powder (cc))

The tap density refers to density measured after repeatedly falling the vessel filled with the powder at a certain height at a constant speed so that the powder is densely packed in the vessel until the volume of the powder in the vessel is almost uniform. In the present disclosure, the tab density was measured using the powder measurement machine (Powerpro AI, Better size instrument) in accordance with ISO3953:1993. Specifically, 10g of electrode powder was filled in the 250 ml mass cylinder, the tapping stroke length of 10 mm was performed 1250 times, and when a change in volume is equal to or less than 2%, the volume at that time was determined as the final apparent volume. Subsequently, the tab density was calculated from the following Relation equation 6.

Tab density = Mass of electrode powder (g) /Final apparent volume of electrode powder (cc)        [Relation equation 6]

**Example 1**

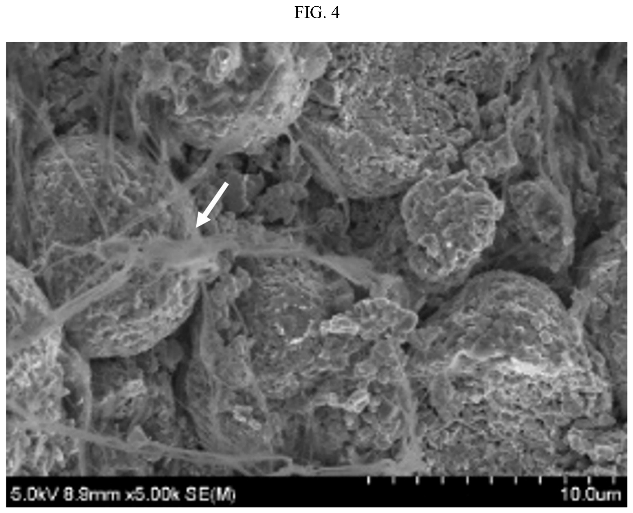

The obtained electrode powder A was fed into the calender roller (roll diameter: 88 mm, roll temperature: 100°C, roll speed ratio 20/24 rpm) and compressed into a plate shape, and the formed result undergone the calendaring process in the same condition to manufacture a free standing type dry electrode film. Subsequently, it was laminated with aluminum (thickness 20 $\mu$m) to manufacture a dry electrode. In the manufactured electrode, the thickness (one side) of the electrode active material layer was about 60 $\mu$m and the total thickness of the electrode including the current collector was about 140 $\mu$m. FIG. 4 is an SEM image showing the surface of the electrode prepared in Example 1. Referring to FIG. 4, it was confirmed that large pores were present between the electrode active material particles and the diameter of fibrils was 1 $\mu$m or more. FIG. 4 shows fibrils in which parts having the diameter of 1 $\mu$m or more are 10 $\mu$m or longer, and it is predicted that the fibrils will be extended inwards and have parts that are much longer than 10 $\mu$m. Meanwhile, as a result of measuring the degree of crystallinity of the binder in the obtained dry electrode film, the degree of crystallinity of the binder was about 2.5%.

Example 2

The obtained electrode powder B was fed into the calender roller (roll diameter: 88mm, roll temperature: 100°C, roll speed ratio 20/24 rpm) and compressed into a plate shape, and the formed result undergone the calendaring process in the same condition to manufacture a free standing type dry electrode film. Subsequently, it was laminated with aluminum (thickness 20 $\mu$m) to manufacture a dry electrode.

Example 3

The obtained electrode powder C was fed into the calender roller (roll diameter: 88 mm, roll temperature: 100°C, roll speed ratio 20/24 rpm) and compressed into a plate shape, and the formed result undergone the calendaring process in the same condition to manufacture a free standing type dry electrode film. Subsequently, it was laminated with aluminum (thickness 20 $\mu$m) to manufacture a dry electrode.

Comparative Example **1**

96 wt% of (LiNi$_{1/3}$Co$_{1/3}$Mn$_{1/3}$O$_2$; NCM) as a positive electrode active material, 1 wt% of carbon black as a conductive material, and 3 wt% of PVDF as a binder were added to N-methyl-2-pyrrolidone (NMP) as a solvent to prepare a positive electrode mixture slurry. The positive electrode mixture slurry was applied to an aluminum (Al) foil having a thickness of about 20 $\mu$m as a positive current collector, followed by drying and roll pressing, to manufacture a positive electrode.

**Comparative Example 2**

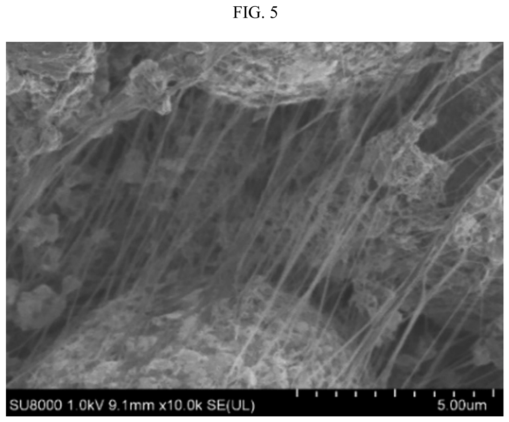

The obtained electrode powder D was fed into the calender roller (roll diameter: 88 mm, roll temperature: 100°C, roll speed ratio 20/24 rpm) and compressed into a plate shape, and the formed result undergone the calendaring process in the same condition to manufacture a free standing type dry electrode film. Subsequently, it was laminated with aluminum (thickness 20 $\mu$m) to manufacture a dry electrode. FIG. 5 is an SEM image showing the surface of the electrode prepared in Comparative Example 2. Referring to FIG. 5, the electrode active material particles and the binder resin were observed, and it was confirmed that the fibrils of the binder resin were much thinner than Example 1, and the diameter was less than 1 $\mu$m.

**Comparative Example 3**

The obtained electrode powder E was fed into the calender roller (roll diameter: 88 mm, roll temperature: 100°C, roll speed ratio 20/24 rpm) and compressed into a plate shape, and the formed result undergone the calendaring process in the same condition to manufacture a free standing type dry electrode film. Subsequently, it was laminated with aluminum (thickness 20 $\mu$m) to manufacture a dry electrode.

**Experimental Example 1 Evaluation of charge/discharge efficiency as a function of rate**

A coin type battery was manufactured using the electrode obtained in Example 1 and lithium metal. A separator was placed between the electrode and the lithium metal, and an electrolyte solution including an organic solvent (ethylene carbonate : Dimethyl carbonate 7:3 volume ratio) and LiPF$_6$ 1M was injected. A battery was manufactured by the same method using the electrode obtained in each of Comparative Example 1 and Comparative Example 2.

Each battery was charged/discharged at the ambient temperature of 25°C and capacity was measured. For each battery, the charge was performed at the varying rate of 2C, 1.5C, 1C and 0.2C up to 4.4V in a constant current (CC)/constant voltage (CV) mode, and the cut-off current was 0.05C. The discharge was performed at 1C in the constant current (CC) condition up to 3V. The charge/discharge was repeated 40 times in the same conditions.

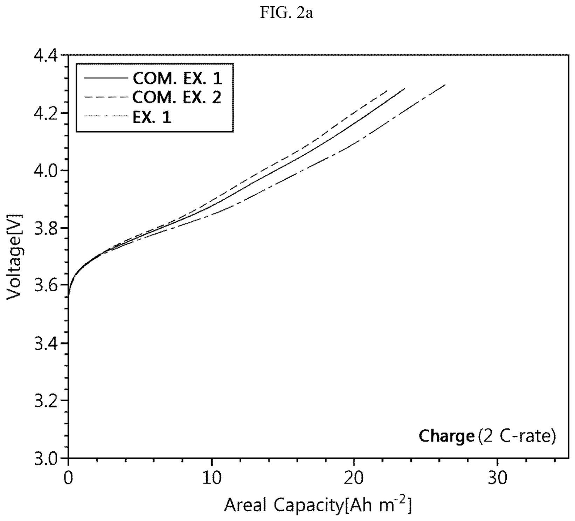

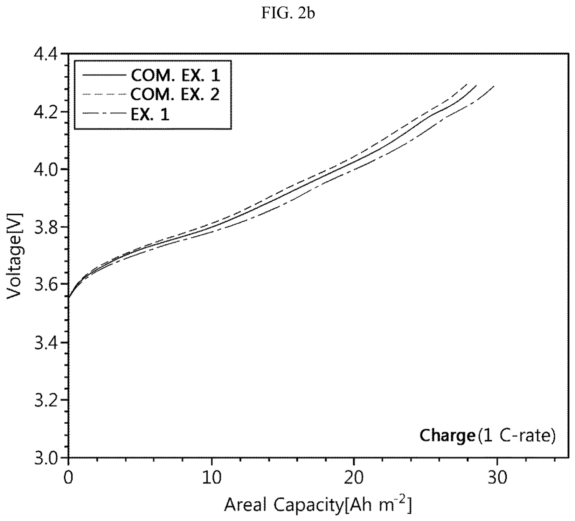

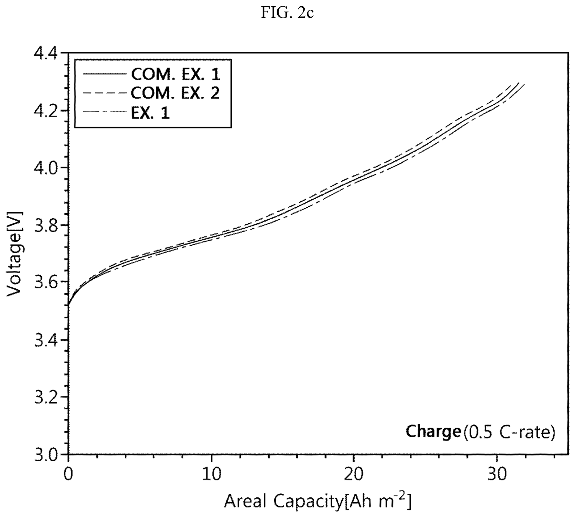

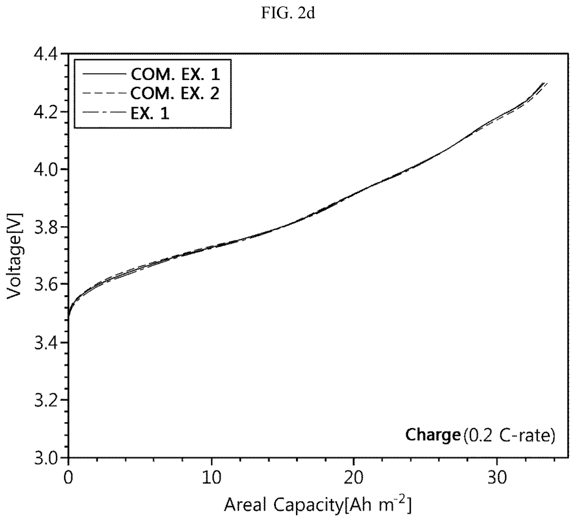

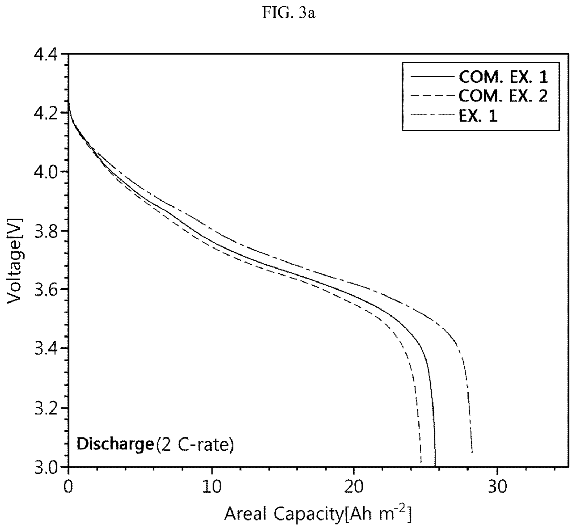

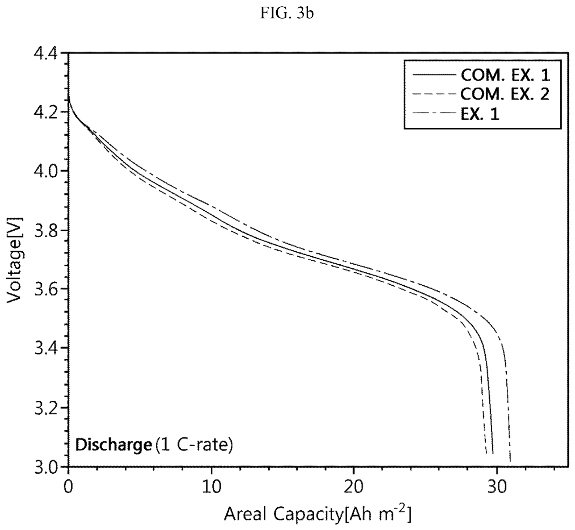

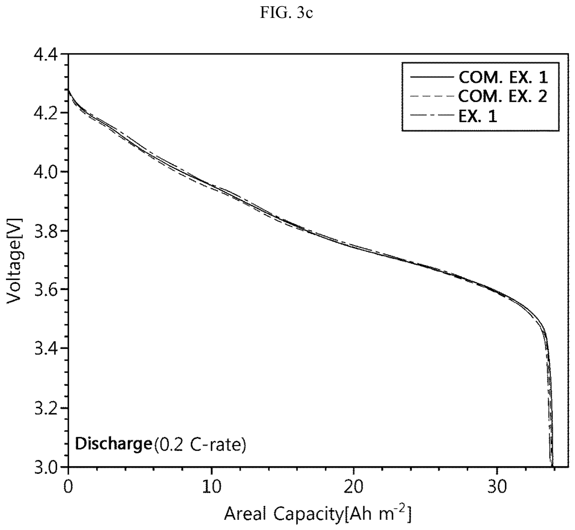

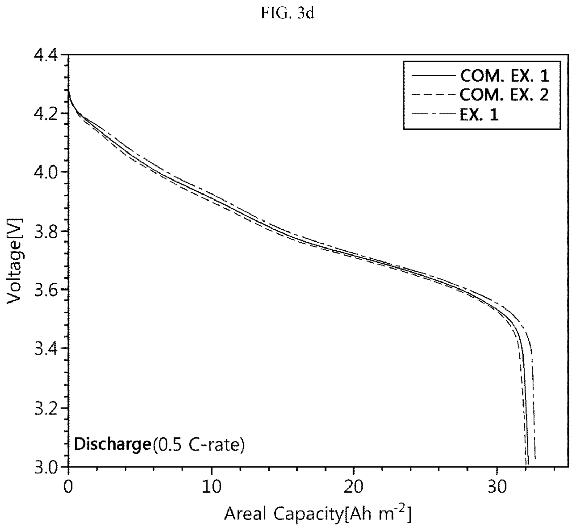

FIGS. 2a to 2d are charge graphs and FIGS. 3a to 3d are discharge graphs. Referring to the drawings, it was confirmed that as the rate was lower, Example 1 and Comparative Example 1 and 2 exhibited similar tendencies, but in the case of high rate charge/discharge of 1C or more, the battery of Example 1 had high charge/discharge efficiency.

**Experimental Example 2 3D modeling of electrode**

The electrode of each of Examples 1 to 3 and Comparative Examples 1 to 3 was 3D modeled in the following sequence.

First, a cross section image of the electrode was obtained using Focused Ion Beam Scanning Electron Microscope (FIB-SEM). As a light source, $Ga^+$ was used, and the cutting speed of the electrode was 2.1 μA and the interval was set to 300 nm. Each obtained electrode cross section SEM image was filtered using a Fast Fourier Transform (FFT) filter to remove noise and make a brightness difference of each of the electrode active material, the conductive material, the pore, the current collector and the binder resin. Subsequently, a threshold value for brightness was set for each material and labeling and masking was performed for each material. Subsequently, 3D structure modeling was performed for each material based on the image brightness value. The 3D structure modeling representing boundaries between materials was performed by applying an edge detection algorithm, for example, Canny Edge Detection. In addition, image correction was performed until the material was filled up to watershed lines of each material. In the 3D modeling, the voxel size was set to 100 $μm^3$. The watershed refers to an image processing technique that computes a height based on the pixel brightness value of the image, and divides the image into segments including a basin surrounded by a contour line when filling with water under the assumption of the corresponding image in 2D geometry.

**Experimental Example 3 porosity distribution**

From the 3D modeling structure of the electrode obtained by the above-described method, the structural features of pores of each electrode such as porosity, average diameter (μm), porosity (vol%) and volume ratio (vol%) of pores having the pore diameter of 2 μm to 4 μm were determined. The number of voxels in the obtained 3D structure was determined and porosity, pore diameter and pore structure were calculated. For example, under the assumption that the electrode active material layer includes 100 voxels, and among them, thirty voxels correspond to pores, the pore volume was calculated as "(30/100)x100", i.e., 30 vol%. In the case of pore diameter, pore voxels were formed by spherical-/elliptical (oval) particles using a watershed algorithm, and the number of voxels in a, b, c directions (perpendicular to one another) was determined, and multiplied by the unit length of a voxel to calculate the diameter.

The pore diameter is based on the longest pore diameter, and the average diameter is based on the number average value. The following TABLE 2 summaries them. Additionally, FIG. 1d shows the porosity distribution of the electrode (the electrode active material layer) of Example 1, Comparative Example 1 and Comparative Example 2.

Referring to Table 2 and FIG. 1d, it was confirmed that the electrode active material layer of Example 1 to Example 3 according to the present disclosure had a larger distribution of number and volume of pores in the diameter range between about 4 μm and 8 μm. Additionally, it was confirmed that Example 1 to Example 3 had a larger average pore diameter than Comparative Example 1 and Comparative Example 3, and the average pore diameter was about 6.5 μm or more. On the other hand, Comparative Example 1 to Comparative Example 3 had a larger number of pores having the diameter of 4 μm or less than Example 1 to Example 3. That is, it was confirmed that the electrode according to the present disclosure had more uniform diameter and smaller deviation than Comparative Example 1 to Comparative Example 3. Meanwhile, the electrode of Example and the electrode of Comparative Example had similar porosity ranges. It was confirmed that the electrodes of Example and Comparative Example had similar porosity but a significant difference in structural features of pores inside. Meanwhile, the following porosity is calculated based on [Relation equation 1a].

[TABLE 2]

|  | Example 1 | Example 2 | Example 3 | Comparative Example 1 | Comparative Example 2 | Comparative Example 3 |
|---|---|---|---|---|---|---|
| Average pore diameter(μm) (entire range) | 6.91 μm | 6.89 μm | 6.95 μm | 6.41 μm | 6.43 μm | 6.50 μm |
| Average pore diameter(μm) (pore diameter range between 4 μm and 8 μm) | 6.61 μm | 6.58 μm | 6.59 μm | 6.27 μm | 6.25 μm | 6.28 μm |
| Ratio of pores having pore diameter of 4 μm to 8 μm to total number of pores (%) | 84% | 85% | 79% | 73.20% | 68.98% | 70.2% |
| Porosity of dry electrode film (vol%) | 24.6 vol% | 24.6 vol% | 24.6 vol% | 24.6 vol% | 24.6 vol% | 24.6 vol% |

(continued)

|  | Example 1 | Example 2 | Example 3 | Comparative Example 1 | Comparative Example 2 | Comparative Example 3 |
|---|---|---|---|---|---|---|
| Volume ratio of pores having pore diameter of less than 4 μm to all pores (vol%) | 4.1 vol% | 4.4 vol% | 3.8 vol% | 6.2 vol% | 13.8 vol% | 10.6 vol% |
| Pore volume (vol%) (in a range between 4 μm and 8 μm) | 69.32 vol% | 70.41 vol% | 68.64 vol% | 61.91 vol% | 56.76 vol% | 62.1 vol% |

Additionally, the pore shape was determined based on Krumbein Sphericity from the 3D modeling structure, the ratios of prolate spheroid shape, oblate spheroid shape and sphere shape were determined and the following TABLE 3 summarizes them.

[TABLE 3] Pore shape classification based on Krumbein Sphericity

|  | Ratio of volume occupied by each pore to the total porosity 100 vol% (vol%) | | | | |  |
|---|---|---|---|---|---|---|
| Krumbein sphericity | 0.4 or more and less than 0.8 | | | 0.8 or more and 1 or less |  |  |
| Pore shape | Flat bar | Prolate spheroid | Oblate spheroid | Sphere | Sum |
| Example 1 | 47 vol% | 28 vol% | 23 vol% | 2 vol% | 100 vol% |
| Example 2 | 44 vol% | 28 vol% | 24 vol% | 4 vol% | 100 vol% |
| Example 3 | 47 vol% | 29 vol% | 22 vol% | 2 vol% | 100 vol% |
| Comparative Example 1 | 40 vol% | 32 vol% | 17 vol% | 11 vol% | 100 vol% |
| Comparative Example 2 | 39 vol% | 29 vol% | 25 vol% | 7 vol% | 100 vol% |
| Comparative Example 3 | 37 vol% | 32 vol% | 22 vol% | 9 vol% | 100 vol% |

Referring to the above TABLE 3, it was confirmed that in Example 1 to Example 3, the ratio of flat bar shaped pores was higher than 40 vol% of the total pore volume. Additionally, it was confirmed that in Example 1 to Example 3, the ratio of spherical pores was less than 5 vol% of the total pore volume. According to the above results, it was confirmed that there was a difference in not only pore size but also pore shape between Example and Comparative Example. Here, the flat bar shape refers to a shape having a value of 0.4 to 0.8 on the basis of Krumbein Sphericity, and the sphere shape refers to a shape having a value of 0.8 to 1.0 on the basis of Krumbein Sphericity. In the analysis, a of 0.5, b of 0.1 to 0.15, and c of 1-a-b was determined as flat bar.

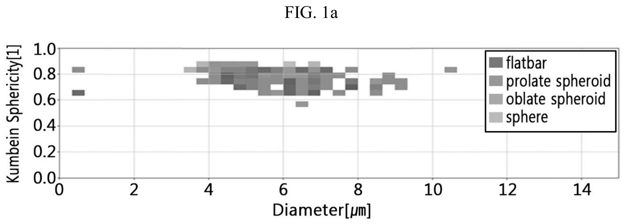

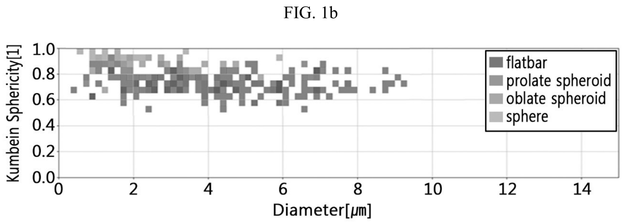

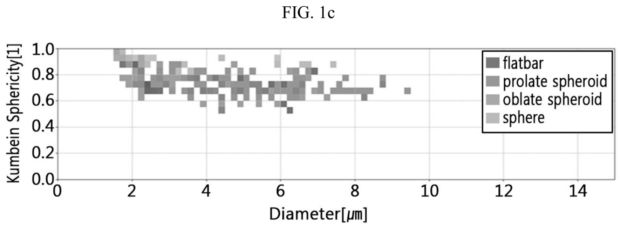

FIGS. 1a, 1b and 1c show the distribution of pore shape and size in the dry electrode films of Example 1, Comparative Example 1 and Comparative Example 2, respectively. In each drawing, red indicates the pore size in flatbar shape, blue indicates prolate spheroid shape, brown indicates oblate spheroid shape, and green indicates sphere shape. FIG. 1c schematically shows the flatbar shape, the prolate spheroid shape in blue, the oblate spheroid shape in brown, and the sphere shape in green.

The Krumbein Sphericity is a value calculated through the following Equation 5, and here, a denotes the longest pore diameter, b denotes the mean value of pore diameter, and c denotes the shortest pore diameter.

[Equation 5]

$$\text{Krumbein Sphericity} = \sqrt[3]{\frac{bc}{a^2}}$$

Here, a denotes the longest pore diameter (long axis length), b denotes the mean value of pore diameter (intermediate axis length), and c denotes the shortest pore diameter (short axis length). Meanwhile, the Krumbein Sphericity may be calculated through an image obtained using an optical or electron microscope. Alternatively, the average pore size may be determined by a method that measures a multi-layer image of FIB SEM cross section and turns it into 3D through 3D reconstruction.

**Experimental Example 4 QBR measurement**

The cross section of the electrode of each of Examples 1 to 3 and Comparative Example 1 to Comparative Example 3 was prepared using Ar ion milling. The cross section refers to a cross section perpendicular to the electrode plane.

EDS mapping was performed for each constituent component of the electrode layer in the electrode cross section prepared using the EDS detector of the SEM equipment. Measurement was done over the measurement area including the entire electrode active material layer and a part of the current collector area in 1024 image pixels at the aspect ratio of 4 in size. The EDS mapping measurement was done by measuring a minimum of 10 frames in the acceleration voltage condition of 5kV of SEM, to measure data of the components of the active material, the conductive material except Li, H, the binder, the current collector.

A line profile by EDS peak deconvolution was extracted in the thickness direction of the electrode from the EDS mapping results through EDS operating software (Oxford Aztec). Among the extracted line profile results, in the graph showing a change in normalized binder intensity of the electrode active material layer in a direction from the surface of the electrode toward the current collector, the average fluorine content $Bs$ of the fluorine-containing binder in the electrode active material layer surface area and the average fluorine content $Bf$ of the fluorine-containing binder in the electrode active material layer bottom area (in contact with the current collector) was extracted, and QBR was calculated using the following Relation equation 2.

$$[\text{Relation equation 2}]$$

$$QBR = Bs/Bf$$

In this instance, the electrode surface area is an area within 15% of the total thickness of the electrode active material layer from the outermost surface in the thickness direction of the electrode active material layer, and the electrode active material layer bottom area is an area within 15% of the total thickness of the electrode active material layer from the current collector contact area in contact with the current collector. The following TABLE 4 summarizes the calculated QBR in each Example and Comparative Example.

[TABLE 4]

|  | Example 1 | Example 2 | Example 3 | Comparative Example 1 | Comparative Example 2 | Comparative Example 3 |
|---|---|---|---|---|---|---|
| QBR | 1.02 | 0.98 | 1.07 | 3.00 | 1.01 | 1.05 |

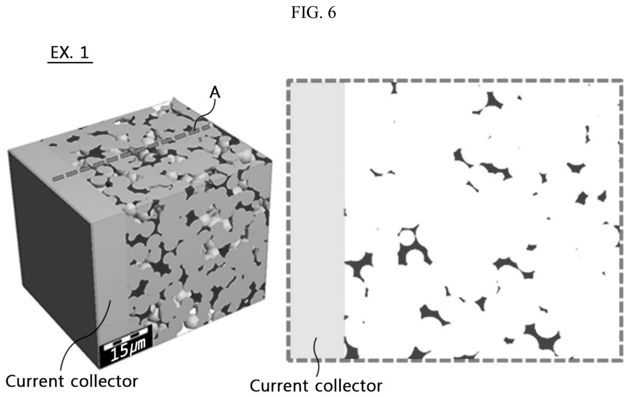

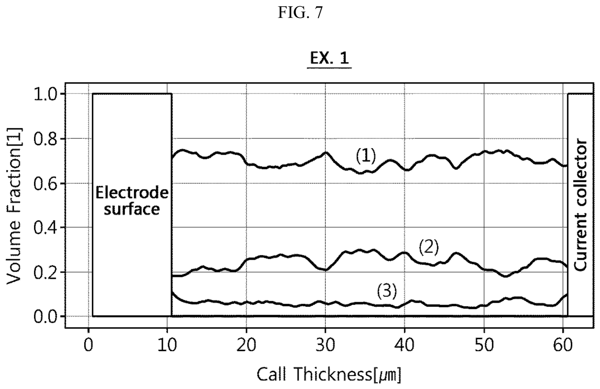

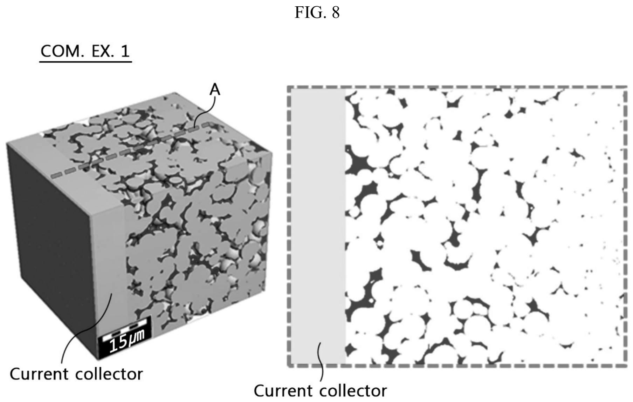

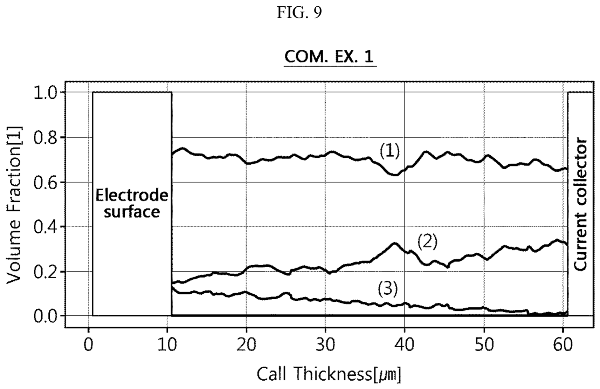

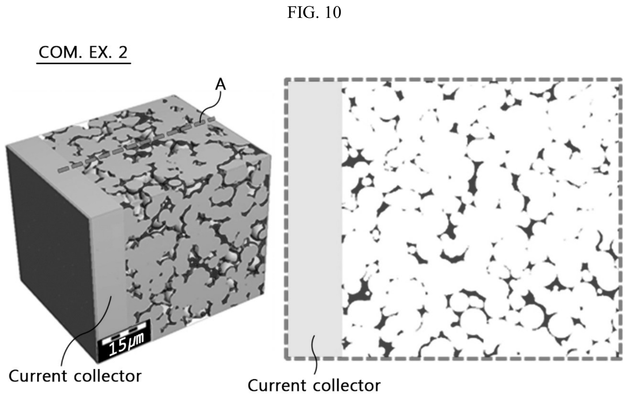

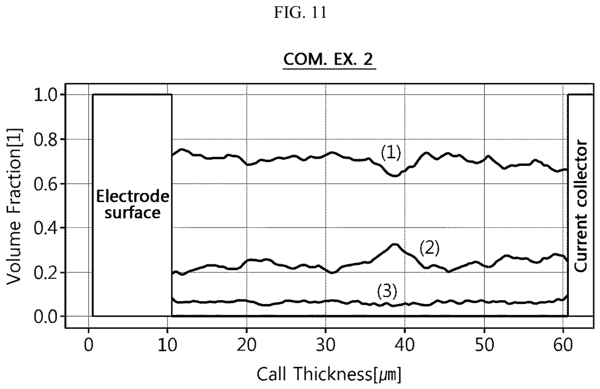

Meanwhile, FIGS. 6, 8 and 10 show 3D images (left) obtained using the 3D modeling structures of the electrodes according to Example 1, Comparative Example 1 and Comparative Example 2 and the cross sections (right) of the dotted (A) areas, respectively. The dark area in cross section indicates the pore. Additionally, FIGS. 7, 9 and 11 show the volume fraction of the electrode components of Example 1, Comparative Example 1 and Comparative Example 2, respectively. In FIGS. 7, 9 and 11, (1) indicates the volume fraction of the electrode active material, (2) indicates the volume fraction of the pore, and (3) indicates the volume fraction of the binder.

Referring to the drawings, it was confirmed that in the case of Comparative Example 1, the binder content decreased toward the current collector, while in the present disclosure, the binder content in the electrode surface and the current collector was uniformly maintained.

**Experimental Example 5 Determination of resistance characteristics of electrode**

For each dry electrode obtained in Examples 1 to 3 and Comparative Examples 1 to 3, interface resistance and electrode resistance were measured using a Hioki MP resistance meter. The electrode obtained in each of Example and Comparative Example was cut into a size of 100 mm x 100 mm, an electric current of 100 uA was applied to the electrode, and the electrode resistance of the dry electrode film (the electrode active material layer) and interface resistance between the electrode layer/the current collector layer were measured from a difference in potential between 46 probes.

The thickness of the electrode active material layer, the thickness of the current collector, and the resistance of the current collector were inputted. Here, the thickness of the dry electrode film and the current collector was measured using a thickness gauge, and the resistance of the current collector was set to 2.82E-06 ohm. The resistance was measured at room temperature, and the measurement was done five times in the same way and average was calculated. TABLE 5 shows the comparison results. The same powder blend was used, but it was confirmed that there was a significant difference in characteristics between the electrode powder depending on the applied kneading process conditions, and the electrode of Example had superior resistance characteristics over the electrode of Comparative Example.

[TABLE 5]

| | Electrode resistance (ohm·cm) | Interface resistance (ohm·cm$^2$) |
|---|---|---|
| Example 1 | 70 | 0.30 |
| Example 2 | 65 | 0.29 |
| Example 3 | 64 | 0.32 |
| Comparative Example 2 | 81 | 0.29 |
| Comparative Example 3 | 75 | 0.33 |

**Experimental Example 6 Delithiated area identification**

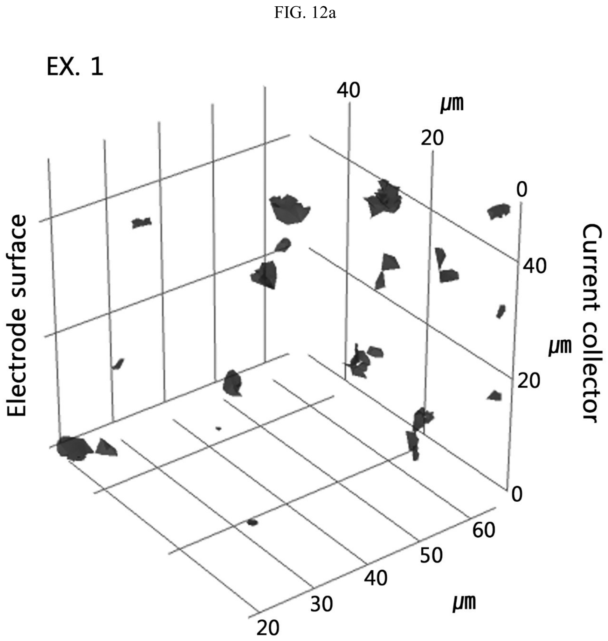

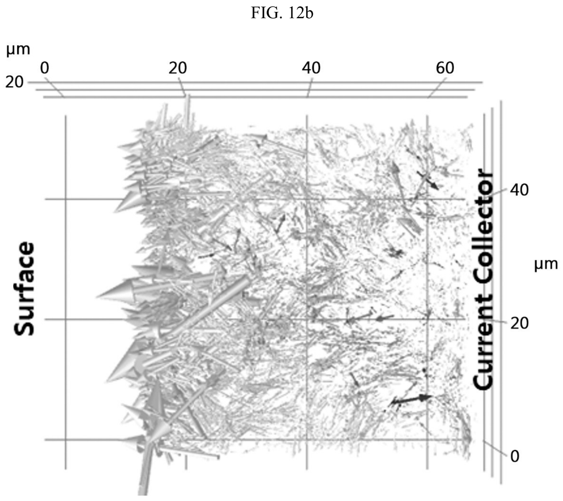

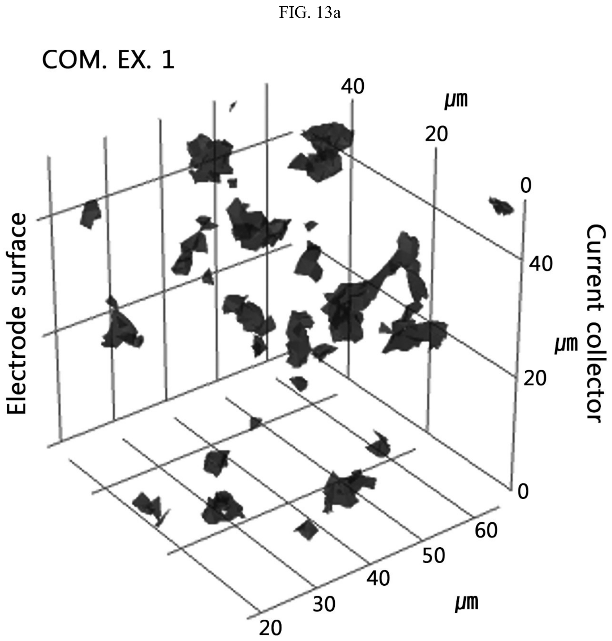

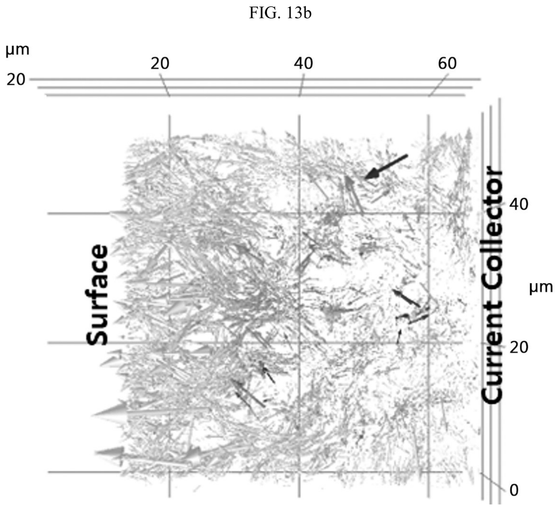

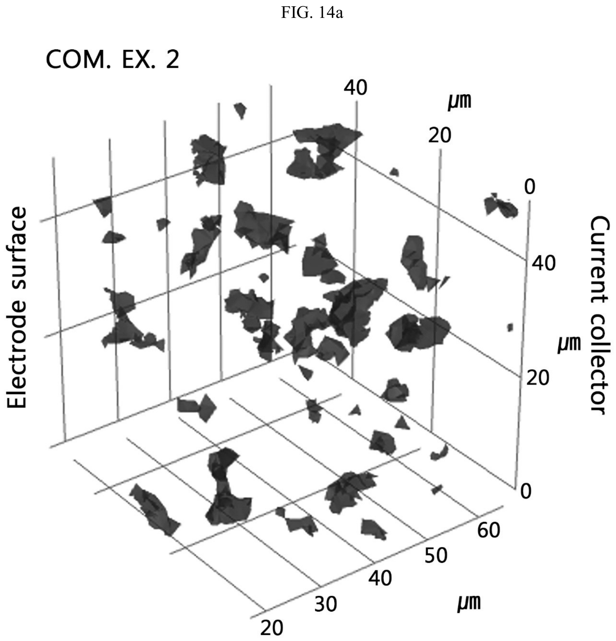

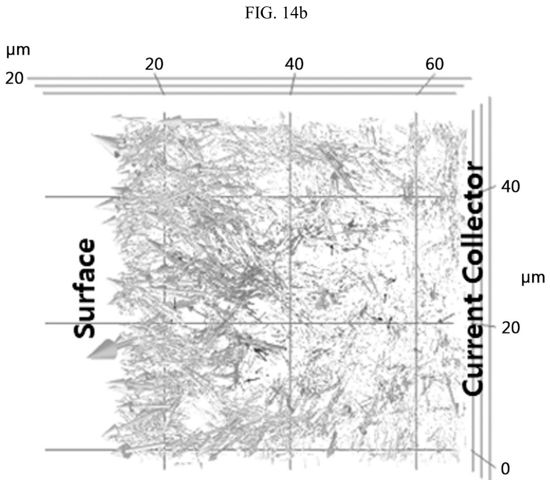

The experiment was performed to simulate the movement of lithium ions during charging and discharging using the 3D modeling structure of the electrode (positive) according to each of Example 1, Comparative Example 1 and Comparative Example 2 and 3D mapping showed the delithiated area in the electrode at the end of 2C charge. In each drawing, the current collector is located, and gets closer to the electrode surface as it goes to the left. FIGS. 12a to 14b show the simulation results of Example 1, Comparative Example 1 and Comparative Example 2, respectively. Referring to FIGS. 12a to 14b, a larger amount of delithiated lithium at the electrode (positive) was observed in the batteries of Comparative Example 1 and Comparative Example 2. Comparative Example 1 and Comparative Example 2 had a larger amount of delithiated lithium inside the electrode than the electrode surface (on the left side of the image) because the movement of lithium to the electrode surface was not good. In contrast, it was confirmed that the battery of Example 1 had a smaller amount of delithiated lithium inside the electrode than Comparative Example. That is, it was confirmed that the dry electrode according to the present disclosure is advantageous for lithium movement during high rate charging/discharging.

**Experimental Example 7 Measurement of tortuosity**

[TABLE 6]

| | Example 1 | Comparative Example 1 | Comparative Example 2 |
|---|---|---|---|
| Geodesic | 1.12 | 1.09 | 1.16 |
| Physical | 2.54 | 3.59 | 2.34 |

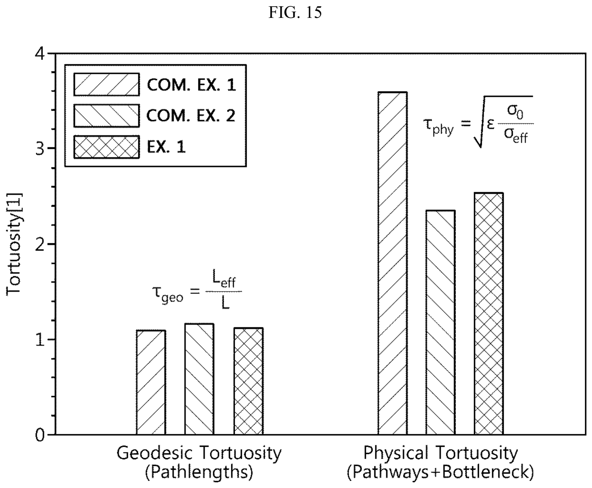

FIG. 15 is a graph showing the result of calculating geodesic tortuosity and physical tortuosity of the electrode active material layer in the electrode according to each of Example 1, Comparative Example 1 and Comparative Example 2. Referring to FIG. 15, it was confirmed that the electrode of Example 1 had superior geodesic tortuosity and physical tortuosity over the electrode of Comparative Example 1. Accordingly, the battery including the electrode of Example 1 had better electrical and chemical properties during charging/discharging than the battery including the electrode of Comparative Example 1. On the other hand, it was confirmed that the electrode of Example 1 and the electrode of Comparative Example 2 had similar tortuosity but substantially a difference in pore structure and the battery including the electrode of Example 1 had better electrical and chemical properties than the battery including the electrode of Comparative Example 2.

**Experimental Example 8 Measurement of degree of crystallinity**

In the dry electrode film of each of Example 1 to Example 3 and Comparative Example 3, the degree of crystallinity of the binder resin was measured.

[TABLE 7]

|  | Example 1 | Example 2 | Example 3 | Comparative Example 2 | Comparative Example 3 |
|---|---|---|---|---|---|
| Degree of crystallinity (%) | 2.5% | Less than 1% | 4.2% | Less than 1% | 2.4% |

As a result of measuring the degree of crystallinity, all Example 1 to Example 3 and Comparative Example 2 and Comparative Example 3 exhibited the degree of crystallinity of less than 5%. It was confirmed that the binder resin exhibited the similar degree of crystallinity though, there was a difference in pore structure in the electrode and electrical and chemical performance of the battery.

The degree of crystallinity Xc was measured by weighing and putting about 5 mg to 12 mg of sample into TA differential scanning calorimetry (DSC), and measuring the heat of fusion ($\triangle$ heat of fusion) as a function of temperature in a temperature range between 25°C and 360°C under nitrogen atmosphere while increasing the temperature at 10°C/min. The melting point Tm and the enthalpy of fusion ($\triangle Hm$) were analyzed using TA Instruments TROIS program based on the temperature (peak temperature) at the time when the enthalpy is at the maximum during melting. The degree of crystallinity of each sample is a % ratio obtained by dividing the enthalpy of fusion ($\triangle Hm$) value actually measured by DSC by the enthalpy of fusion ($\triangle Hm_0$) value of a theoretically perfect crystal (degree of crystallinity 100%), and was calculated by the above Relation equation 5. The enthalpy of fusion value of the theoretically perfect crystal of PTFE was 85.4J/g and reference was made to Polymer Journal vol. 46 (2005) pages 8872~8882.

**Claims**

1. A dry electrode for an electrochemical device, comprising a dry electrode film as an electrode active material layer,

   wherein the electrode active material layer includes an electrode active material and a binder resin, and the binder resin is fibrillated, and
   wherein the electrode active material layer has an average pore diameter of 5.0 $\mu$m or more and a porosity of from 15 vol% to 50 vol%, and the average pore diameter is calculated based on a longest pore diameter.

2. The dry electrode for the electrochemical device according to claim 1,
   wherein the average pore diameter of the electrode active material layer is 6.0 $\mu$m or more.

3. The dry electrode for the electrochemical device according to claim 1,
   wherein the average pore diameter of the electrode active material layer is 6.5 $\mu$m or more.

4. The dry electrode for the electrochemical device according to claim 1,
   wherein in the electrode active material layer, the average diameter of pores having the diameter of from 4 $\mu$m to 8 $\mu$m is 6.5 $\mu$m or more.

5. The dry electrode for the electrochemical device according to claim 1,
   wherein in the electrode active material layer, a ratio of a number of pores having the diameter of from 4 $\mu$m to 8 $\mu$m to a total number of pores is 80% or more.

6. The dry electrode for the electrochemical device according to claim 1,
   wherein in the electrode active material layer, a ratio of a volume of pores having the diameter of from 4 $\mu$m to 8 $\mu$m to a total pore volume is 60% or more.

7. The dry electrode for the electrochemical device according to claim 1,

   wherein in the electrode active material layer, a geodesic tortuosity $\tau_{geo}$ according to the following Equation 1 is 1.15 or less:

[Equation 1]

$$\tau_{geo} = \frac{L_{eff}}{L}$$

wherein in the above Equation 1, L denotes a thickness of the electrode active material layer, and $L_{eff}$ denotes a lithium ion movement path length in the electrode active material layer.

**8.** The dry electrode for the electrochemical device according to claim 7,

wherein in the electrode active material layer, a physical tortuosity $\tau_{phy}$ according to the following Equation 2 is 3 or less:

[Equation 2]

$$\tau_{phy} = \sqrt{\varepsilon \frac{\sigma_0}{\sigma_{eff}}}$$

wherein in the above Equation 2, $\varepsilon$ denotes the porosity of the electrode active material layer, $\sigma_0$ denotes an electrolyte conductivity and $\sigma_{eff}$ denotes an effective electrolyte conductivity by pore structure.

**9.** The dry electrode for the electrochemical device according to claim 1,
wherein the binder resin includes polytetrafluoroethylene PTFE, polyvinylidene fluoride PVDF, polyolefin, or a mixture of two or more of them.

**10.** The dry electrode for the electrochemical device according to claim 1,
wherein a degree of crystallinity of the dry electrode film is more than 0% and 10% or less.

**11.** The dry electrode for the electrochemical device according to claim 1,
wherein the binder resin includes fibrillated fibrils of which parts have a diameter of 1 $\mu$m or more.

**12.** The dry electrode for the electrochemical device according to claim 11,
wherein the fibrillated binder resin includes the fibrils of which the parts having the diameter of 1 $\mu$m or more are 5 $\mu$m or more in length.

**13.** A method for manufacturing a dry electrode film according to claim 1, the method comprising the steps of:

(S10) preparing a powdery blend including an electrode active material, a conductive material, and a binder resin;
(S20) kneading the powdery blend in a range between 70°C and 200°C to prepare a bulk blend;
(S30) grinding the bulk blend to obtain an electrode powder; and
(S40) calendering the electrode powder.

**14.** The method for manufacturing the dry electrode film according to claim 13,
wherein a D50 of the electrode powder obtained in the (S30) ranges from 100 $\mu$m to 700 $\mu$m.

FIG. 1a

FIG. 1b

FIG. 1c

FIG. 1d

FIG. 1e

FIG. 2a

FIG. 2b

FIG. 2c

FIG. 2d

FIG. 3a

FIG. 3b

FIG. 3c

FIG. 3d

FIG. 4

FIG. 5

SU8000 1.0kV 9.1mm x10.0k SE(UL)     5.00um

FIG. 6

EX. 1

Current collector

Current collector

FIG. 7

FIG. 8

COM. EX. 1

Current collector

Current collector

FIG. 9

COM. EX. 1

FIG. 10

COM. EX. 2

Current collector

Current collector

FIG. 11

## COM. EX. 2

FIG. 12a

EX. 1

FIG. 12b

FIG. 13a

COM. EX. 1

FIG. 13b

FIG. 14a

COM. EX. 2

FIG. 14b

FIG. 15

$$\tau_{geo} = \frac{L_{eff}}{L}$$

$$\tau_{phy} = \sqrt{\varepsilon \frac{\sigma_0}{\sigma_{eff}}}$$

Legend: COM. EX. 1, COM. EX. 2, EX. 1

Y-axis: Tortuosity[1]

X-axis: Geodesic Tortuosity (Pathlengths), Physical Tortuosity (Pathways+Bottleneck)

FIG. 16

FIG. 17

FIG. 18

FIG. 19

FIG. 20

5.0kV 9.7mm x1.00k SE(M)                50.0um

FIG. 21

## INTERNATIONAL SEARCH REPORT

International application No.

**PCT/KR2024/012023**

| A. | CLASSIFICATION OF SUBJECT MATTER |
|---|---|

**H01M 4/131**(2010.01)i; **H01M 4/04**(2006.01)i; **H01M 4/62**(2006.01)i; **H01M 4/1391**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/131(2010.01); C23F 13/16(2006.01); C25D 7/00(2006.01); H01G 11/86(2013.01); H01M 10/04(2006.01); H01M 10/052(2010.01); H01M 10/0562(2010.01); H01M 4/13(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기화학소자(electrochemical device), 건식 전극(dry electrode), 활물질(active material), 바인더 수지(binder resin), 섬유화(fiberization), 기공(pore), 직경(diameter), 기공도(porosity)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2023-0022129 A (LG ENERGY SOLUTION, LTD.) 14 February 2023 (2023-02-14)<br>See claims 1, 4 and 5; and paragraph [0059]. | 1-14 |
| A | KR 10-1810185 B1 (LG CHEM, LTD.) 19 December 2017 (2017-12-19)<br>See claims 1, 5 and 6; and paragraphs [0064]-[0066]. | 1-14 |
| A | KR 10-2023-0116739 A (LG ENERGY SOLUTION, LTD.) 04 August 2023 (2023-08-04)<br>See claims 1-32; and paragraphs [0434]-[0438]. | 1-14 |
| A | US 2020-0028156 A1 (NAVITAS SYSTEMS, LLC) 23 January 2020 (2020-01-23)<br>See claims 1-20; and paragraphs [0073] and [0094]-[0106]. | 1-14 |
| A | CN 114277414 A (CHINESE OCEAN UNIVERSITY) 05 April 2022 (2022-04-05)<br>See claims 1-10. | 1-14 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 November 2024** | **21 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012023**

| Patent document cited in search report | | | Publication date (day/month/year) | Patent family member(s) | | | Publication date (day/month/year) |
|---|---|---|---|---|---|---|---|
| KR | 10-2023-0022129 | A | 14 February 2023 | CN | 117597792 | A | 23 February 2024 |
| | | | | JP | 2024-519967 | A | 21 May 2024 |
| | | | | KR | 10-2661426 | B1 | 26 April 2024 |
| | | | | WO | 2023-014127 | A1 | 09 February 2023 |
| KR | 10-1810185 | B1 | 19 December 2017 | CN | 107534125 | A | 02 January 2018 |
| | | | | CN | 107534125 | B | 25 May 2021 |
| | | | | EP | 3249720 | A1 | 29 November 2017 |
| | | | | EP | 3249720 | A4 | 26 September 2018 |
| | | | | EP | 3249720 | B1 | 31 July 2019 |
| | | | | JP | 2018-507528 | A | 15 March 2018 |
| | | | | JP | 6636050 | B2 | 29 January 2020 |
| | | | | KR | 10-2016-0128834 | A | 08 November 2016 |
| | | | | US | 10644346 | B2 | 05 May 2020 |
| | | | | US | 2018-0097255 | A1 | 05 April 2018 |
| | | | | WO | 2016-175560 | A1 | 03 November 2016 |
| KR | 10-2023-0116739 | A | 04 August 2023 | WO | 2023-146377 | A1 | 03 August 2023 |
| US | 2020-0028156 | A1 | 23 January 2020 | US | 11870057 | B2 | 09 January 2024 |
| | | | | US | 2024-0105913 | A1 | 28 March 2024 |
| CN | 114277414 | A | 05 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230105146

**Non-patent literature cited in the description**

- *IOP Conf. Series: Earth and Environmental Science*, 2019, vol. 311, 012041
- **KEVIN GERING**. Idaho National Laboratory. *Journal of The Electrochemical Society*, 2018, vol. 165 (14), A3350-A3359
- Polymer Journal. 2005, vol. 46, 8872-8882